# EUROPEAN PATENT APPLICATION

(11) **EP 4 661 416 A1**
(43) Date of publication of application: **10.12.2025**
(21) Application number: 25179586.0
(22) Date of filing: 28.05.2025
(51) Int. Cl.: H04N 25/617, H04N 25/771, H04N 25/709, H04N 25/79

(54) **PHOTOELECTRIC CONVERSION APPARATUS AND EQUIPMENT**

(30) Priority: 05.06.2024 JP 2024091220
(71) Applicant: CANON KABUSHIKI KAISHA, Tokyo 146-8501 (JP)
(72) Inventor: OGURO, Yasuhiro, Tokyo 146-8501 (JP); NAKAMURA, Kohichi, Tokyo 146-8501 (JP)
(74) Representative: Canon Europe Limited

(57) **Abstract**

A photoelectric conversion apparatus includes a plurality of substrates including a first substrate and a second substrate, a plurality of pixels each including a photoelectric conversion element configured to generate a charge based on an amount of light received, a floating diffusion configured to output a signal based on the charge, and a first source-follower circuit configured to amplify the signal output from the floating diffusion, the first source-follower circuit including an amplification transistor and a first transistor configured to drive the amplification transistor, a first holding circuit electrically connected to a gate electrode of the first transistor, a second source-follower circuit configured to amplify a signal output from the first source-follower circuit, and a signal processing circuit configured to process a signal output from the second source-follower circuit. The photoelectric conversion element is disposed on the first substrate. The signal processing circuit is disposed on the second substrate.

## Description

### BACKGROUND OF THE INVENTION

### Field of the Invention

The present invention relates to a photoelectric conversion apparatus and equipment.

### Description of the Related Art

International Patent Publication No. 2021/215105 discusses a solid-state image sensor that includes charge holding units configured to temporarily hold charges and has a global shutter function of transferring charges from photoelectric conversion elements to the charge holding units in a plurality of pixels at the same time. The configuration discussed in International Patent Publication No. 2021/215105 also includes source-follower circuits that amplify the signals output from the pixels and current sources for driving the source-follower circuits.

In the solid-state image sensor discussed in International Patent Publication No. 2021/215105, however, variations in a bias voltage supplied to the current sources for driving the source-follower circuits can degrade the quality of the signals obtained via the source-follower circuits.

### SUMMARY OF THE INVENTION

The present disclosure is directed to providing a high-performance photoelectric conversion apparatus with no or minimal degradation like this in signal quality.

According to a first aspect of the present invention, there is provided a photoelectric conversion apparatus as specified in claims 1 to 23. According to a second aspect of the present invention, there is provided equipment as specified in claim 24.

Further features of the present invention will become apparent from the following description of embodiments with reference to the attached drawings.

### BRIEF DESCRIPTION OF THE DRAWINGS

Fig. 1 is a block diagram for describing a photoelectric conversion apparatus according to a first embodiment.
Fig. 2 is a circuit diagram for describing the photoelectric conversion apparatus according to the first embodiment.
Figs. 3A, 3B, and 3C are schematic diagrams for describing the photoelectric conversion apparatus according to the first embodiment.
Fig. 4 is a circuit diagram for describing a photoelectric conversion apparatus according to a modification of the first embodiment.
Fig. 5 is a circuit diagram for describing a photoelectric conversion apparatus according to a second embodiment.
Figs. 6A and 6B are schematic diagrams for describing the photoelectric conversion apparatus according to the second embodiment.
Fig. 7 is a circuit diagram for describing a photoelectric conversion apparatus according to a third embodiment.
Fig. 8 is a plan view for describing the photoelectric conversion apparatus according to the third embodiment.
Figs. 9A and 9B are a circuit diagram for describing a photoelectric conversion apparatus according to a fourth embodiment.
Fig. 10 is a plan view for describing the photoelectric conversion apparatus according to the fourth embodiment.
Fig. 11 is a circuit diagram for describing a photoelectric conversion apparatus according to a fifth embodiment.
Fig. 12 is a plan view for describing a photoelectric conversion apparatus according to the fifth embodiment.
Figs. 13A and 13B are a circuit diagram for describing a photoelectric conversion apparatus according to a sixth embodiment.
Fig. 14 is a circuit diagram for describing a photoelectric conversion apparatus according to a seventh embodiment.
Fig. 15 is a schematic diagram for describing the photoelectric conversion apparatus according to the seventh embodiment.
Fig. 16 is a circuit diagram for describing a photoelectric conversion apparatus according to an eighth embodiment.
Fig. 17 is a circuit diagram for describing a photoelectric conversion apparatus according to a ninth embodiment.
Fig. 18 is a plan view for describing the photoelectric conversion apparatus according to the ninth embodiment.
Figs. 19A and 19B are a circuit diagram for describing a photoelectric conversion apparatus according to a tenth embodiment.
Fig. 20 is a plan view for describing the photoelectric conversion apparatus according to the tenth embodiment.
Fig. 21 is a circuit diagram for describing a photoelectric conversion apparatus according to an eleventh embodiment.
Figs. 22A and 22B are a circuit diagram for describing a photoelectric conversion apparatus according to a twelfth embodiment.
Figs. 23A, 23B, and 23C are schematic diagrams for describing equipment according to a thirteenth embodiment.

### DESCRIPTION OF THE EMBODIMENTS

Embodiments will be described below with reference to the drawings. The following embodiments are not intended to limit the invention set forth in the claims. While the embodiments describe a plurality of features, all of the plurality of features is not necessarily essential to the invention, and more than one feature may be freely combined. In the attached drawings, the same or similar components are denoted by the same reference numerals, and a redundant description thereof will be omitted. In each of the following embodiments, an imaging sensor will mainly be described as an example of a photoelectric conversion apparatus. However, the embodiments are not limited to imaging sensors, and can be applied to other examples of the photoelectric conversion apparatus. Examples include imaging apparatuses, ranging apparatuses (distance measurement apparatuses using focus detection or Time of Flight [ToF]), and metering apparatuses (apparatuses for measuring the amount of incident light). Each of the embodiments of the present invention described below can be implemented solely or as a combination of a plurality of the embodiments or features thereof where necessary or where the combination of elements or features from individual embodiments in a single embodiment is beneficial.

As employed herein, terms expressing specific directions or positions (such as "top", "bottom", "right", "left", and other terms including these) are used as appropriate. These terms are used for the purpose of facilitating the understanding of the embodiments with reference to the drawings, and the technical scope of the present invention shall not be limited by the meanings of the terms.

As employed herein, a statement "member A and member B are electrically connected" is not limited to cases where members A and B are directly connected. For example, members A and B can be electrically connected even with another member C connected therebetween.

As employed herein, a "plane" refers to a plane parallel to a main surface of a substrate. The main surface of a substrate can be a light incident surface of a substrate that includes photoelectric conversion elements, a surface where a plurality of analog-to-digital conversion circuits is repeatedly arranged, or a bonding surface between substrates of a stacked photoelectric conversion apparatus.

A "plan view" refers to a view in a direction perpendicular to the main surface of a substrate. A "cross section" refers to a plane in a direction perpendicular to the light incident surface of a semiconductor layer. A "cross-sectional view" refers to a view in a direction parallel to the main surface of a substrate.

As employed herein, metal members such as wiring and pads may be made of a single-element metal alone or a mixture (alloy). For example, wiring described to be copper wiring may be made of copper alone, or consist mainly of copper and further contain other components. For example, pads to be connected to external terminals may be made of aluminum alone, or consist mainly of aluminum and further contain other components. The copper wiring and aluminum pads mentioned here are merely examples, and various metals may be used instead. The wiring and pads mentioned here are examples of metal members used in a photoelectric conversion apparatus, and can be applied to other metal members.

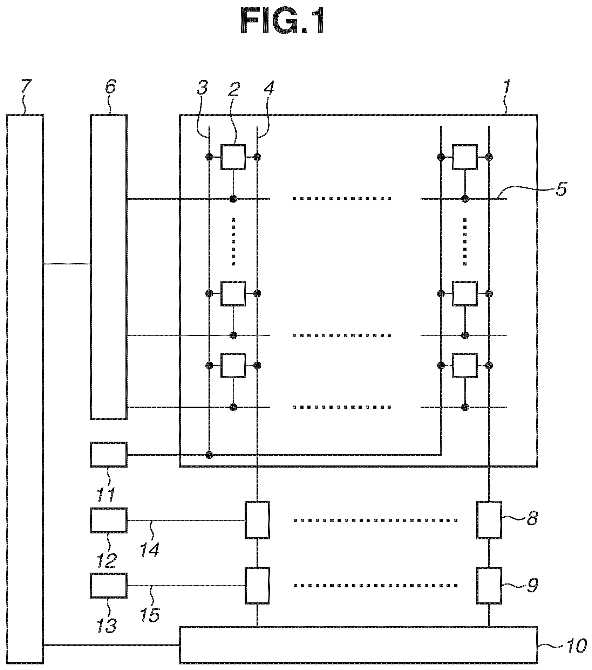

A photoelectric conversion apparatus according to a first embodiment of the present invention will be described with reference to Figs. 1 to 3C.

Fig. 1 is an example of a block diagram of the photoelectric conversion apparatus according to the present embodiment.

As illustrated in Fig. 1, the photoelectric conversion apparatus includes a pixel array 1, output lines 4, control lines 5, a control circuit 6, a timing signal output circuit 7, amplification circuits 8, signal processing circuits 9, and an output circuit 10. The photoelectric conversion apparatus also includes a first bias output circuit 11, a second bias output circuit 12, a third bias output circuit 13, a first bias line 3, a second bias line 14, and a third bias line 15.

The pixel array 1 includes a plurality of pixels 2 that performs photoelectric conversion. The plurality of pixels 2 is arranged in a plurality of rows and a plurality of columns within the pixel array 1. Each of the plurality of pixels 2 includes a photoelectric conversion element that generates and accumulates a charge based on the amount of light received, and outputs a pixel signal based on the amount of incident light. The pixel signals output from the pixels 2 are analog signals.

As employed herein, the horizontal direction in the drawings may be referred to as a row direction, and the vertical direction a column direction. The numbers of rows and columns of the plurality of pixels 2 arranged in the pixel array 1 are not limited in particular. Aside from effective pixels that output the pixel signals based on the amount of incident light, the plurality of pixels 2 may also include optical black pixels where the photoelectric conversion elements are shielded from light, and dummy pixels that do not output signals.

The control lines 5 extending in the row direction are disposed in the respective rows of the pixel array 1. Each of the plurality of control lines 5 is electrically connected to a plurality of pixels 2 arranged in the row direction. One control line 5 controls the plurality of pixels 2 arranged in one row in common. The control circuit 6 supplies control signals to the plurality of pixels 2 via the plurality of control lines 5.

The amplification circuits 8 are provided for the respective columns in which the plurality of pixels 2 is arranged, and amplify the pixel signals output from the pixels 2. A plurality of pixels 2 arranged in a column is electrically connected to the same amplification circuit 8, and the pixel signals output from the pixels 2 are input to the amplification circuit 8.

The output lines 4 extending in the column direction are disposed in the respective columns in which the plurality of pixels 2 is arranged. The plurality of output lines 4 is electrically connected to the respective amplification circuits 8 arranged column by column. The amplification circuits 8 are electrically connected to the signal processing circuits 9. The pixel signals output from the pixels 2 are amplified by the amplification circuits 8 and input to the signal processing circuits 9. The signal processing circuits 9 perform signal processing such as analog-to-digital (AD) conversion processing column by column on the pixel signals output from the amplification circuits 8. Various AD conversion methods can be used, including ramp AD conversion, successive approximation AD conversion, and ΔΣ AD conversion. The number of output lines 4 disposed in a single column is not limited to one, and a plurality of output lines 4 may be disposed. In such a case, a plurality of amplification circuits 8 is disposed for each column, corresponding to the plurality of output lines 4 disposed in each column. With more than one output line 4 disposed in each column, pixels 2 arranged in a plurality of rows can be read at the same timing. This enables high-speed reading operation of the pixel signals.

The output circuit 10 includes buffer amplifies and differential amplifiers. The output circuit 10 performs predetermined signal processing on the pixel signals output from the pixels 2, and outputs the processed pixel signals outside the photoelectric conversion apparatus. Examples of the signal processing for the output circuit 10 to perform may include correlated double sampling (CDS)-based correction processing and amplification processing.

The timing signal output circuit 7 supplies timing signals to the control circuit 6 and the output circuit 10. The timing signal output circuit 7 may generate the timing signals. A circuit different from the timing signal output circuit 7 may generate the timing signals.

The first bias output circuit 11 supplies a bias voltage for operating the pixels 2 to the pixels 2 via the first bias line 3. The second bias output circuit 12 supplies a bias voltage for operating the amplification circuits 8 to the amplification circuits 8 via the second bias line 14. The third bias output circuit 13 supplies a bias voltage for driving the signal processing circuits 9 to the signal processing circuits 9 via the third bias line 15. The first, second, and third bias output circuits 11, 12, and 13 may generate the bias voltages. A circuit different from the bias output circuits may generate the bias voltages.

Fig. 1 illustrates an example where a single circuit block (output circuit 10) for reading the pixel signals is provided. However, a plurality of circuit blocks for reading the pixel signals may be provided. For example, two circuit blocks for reading the pixel signals may be provided, and the pixel signals of the pixels 2 arranged in evennumbered columns may be input to one of the circuit blocks and those of the pixels 2 arranged in odd-numbered columns to the other. This enables high-speed reading of the pixel signals.

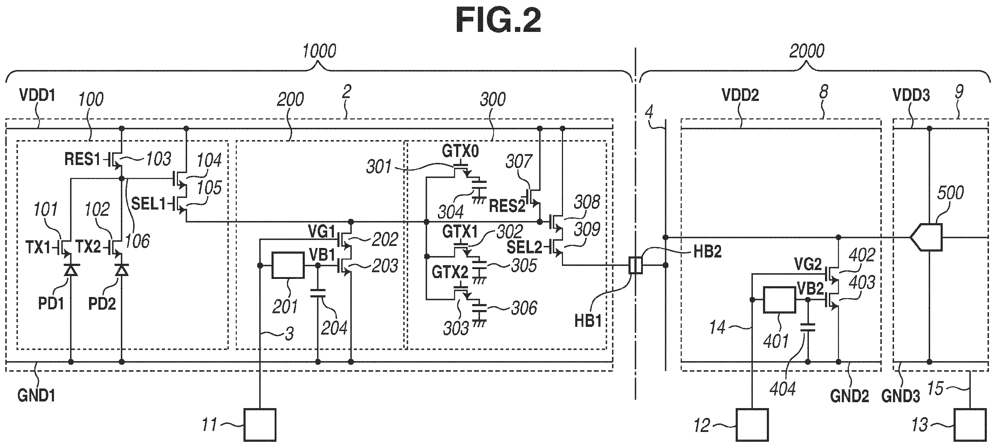

Fig. 2 is an example of a circuit diagram of a pixel 2, an amplification circuit 8, and a signal processing circuit 9 included in the photoelectric conversion apparatus according to the present embodiment. Note that the present embodiment can be applied to both front-illuminated and back-illuminated sensors.

As illustrated in Fig. 2, the photoelectric conversion apparatus includes two substrates, namely, a first substrate 1000 and a second substrate 2000. The photoelectric conversion apparatus has a three-dimensional structure constituted by laminating the two substrates. The first and second substrates 1000 and 2000 are stacked by hybrid bonding, for example. The first substrate 1000 is electrically connected to the second substrate 2000 via first bonding portions HB1 disposed on the first substrate 1000 and second bonding portions HB2 disposed on the second substrate 2000. The bonding of the substrates 1000 and 2000 using the first bonding portions HB1 and the second bonding portions HB2 is not limited to hybrid bonding. The first and second substrate 1000 and 2000 may be bonded by other methods, and electrically connected using conductive vias and bumps. In the present embodiment, the pixels 2 and the first bias output circuit 11 are disposed on the first substrate 1000. The amplification circuits 8, the signal processing circuits 9, the output circuit 10, the second bias output circuit 12, and the third bias output circuit 13 are disposed on the second substrate 2000. The first and second substrates 1000 and 2000 each may be a semiconductor substrate such as a silicon substrate.

As illustrated in Fig. 2, the pixel 2 includes a photoelectric conversion circuit 100, a pixel amplification circuit 200, and a pixel memory circuit 300. The photoelectric conversion circuit 100 includes a first photoelectric conversion element PD1, a second photoelectric conversion element PD2, a first transfer transistor 101, a second transfer transistor 102, and a floating diffusion 106. As employed herein, the floating diffusion 106 may hereinafter be referred to as an FD 106 (FD is an abbreviation of floating diffusion). The FD 106 may also be referred to as a floating diffusion region 106. The photoelectric conversion circuit 100 further includes a first reset transistor 103 for resetting the FD 106, a first amplification transistor 104 for amplifying a signal, and a first selection transistor 105. The first and second photoelectric conversion elements PD1 and PD2 are electrically connected to a first reference voltage line GND1 and thereby supplied with a reference voltage. The first reset transistor 103 and the first amplification transistor 104 are electrically connected to a first power supply voltage line VDD1 and thereby supplied with a power supply voltage. The number of photoelectric conversion elements included in the photoelectric conversion circuit 100 may be one, or three or more.

The first and second photoelectric conversion elements PD1 and PD2 are photodiodes, for example. The first and second photoelectric conversion elements PD1 and PD2 are not limited to photodiodes, and may be photoelectric conversion films, for example. The first and second photoelectric conversion elements PD1 and PD2 receive light incident on the pixel 2, generate charges based on the amount of incident light, and accumulate the charges. The first reset transistor 103 is driven by a control signal RES1. The first reset transistor 103 is turned on to reset the FD 106 to a voltage based on the power supply voltage. The first reset transistor 103 is turned off to end resetting the FD 106. The first transfer transistor 101 is driven by a control signal TX1. The first transfer transistor 101 is turned on to transfer the charge occurring from the first photoelectric conversion element PD1 to the FD 106. The FD 106 functions as a charge-voltage conversion unit that temporarily holds the charge input from the first photoelectric conversion element PD1 and converts the held charge into a voltage signal. The first amplification transistor 104 amplifies the voltage signal (pixel signal) obtained by the FD 106. The first selection transistor 105 is driven by a control signal SEL1. The first selection transistor 105 connects the first amplification transistor 104 to the pixel amplification circuit 200, and outputs the pixel signal amplified by the first amplification transistor 104 to the pixel amplification circuit 200. The second photoelectric conversion element PD2 and the second transfer transistor 102 are driven in the same manner as the first photoelectric conversion element PD1 and the first transfer transistor 101.

The configuration of the photoelectric conversion circuit 100 illustrated in Fig. 2 is merely an example, and may further include transistors having predetermined functions. For example, a transistor for changing the capacitance of the FD 106 and a transistor for draining the charge from the first photoelectric conversion element PD1 may further be included. The photoelectric conversion circuit 100 may be configured without the first selection transistor 105, and its selection and deselection states may be switched by the voltage input from the first reset transistor 103 to the FD 106.

The pixel amplification circuit 200 includes a first bias control circuit 201, a first cascode transistor 202, a first transistor 203, and a first holding circuit 204. The first cascode transistor 202 and the first transistor 203 included in the pixel amplification circuit 200 operate based on control signals supplied from the control circuit 6. The first transistor 203 functions as a current source, and supplies a current to the first amplification transistor 104. The first amplification transistor 104, the first cascode transistor 202, and the first transistor 203 function as a source-follower circuit (first source-follower circuit), whereby the amplified pixel signal is output from the photoelectric conversion circuit 100. Even without the first cascode transistor 202, the first amplification transistor 104 and the first transistor 203 function as a source-follower circuit.

The first bias output circuit 11 outputs a first bias voltage VG1, and supplies the first bias voltage VG1 to the gate electrode of the first cascode transistor 202. The first bias output circuit 11 outputs a second bias voltage VB1, and supplies the second bias voltage VB1 to the gate electrode of the first transistor 203 via the first bias line 3 and the first bias control circuit 201.

The first holding circuit 204 is electrically connected to the gate electrode of the first transistor 203.

The first holding circuit 204 includes a capacitive element (first capacitive element), and functions as a sample-and-hold circuit. The first bias control circuit 201 controls the electrical connection of the first bias line 3 with the gate electrode of the first transistor 203 and the first holding circuit 204. In other words, the first bias control circuit 201 can be said to control the second bias voltage VB1. The capacitive element included in the first holding circuit 204 desirably has a capacitance of 1 fF to 100 fF. The capacitance of the capacitive element included in the first holding circuit 204 is more desirably 10 fF to 50 fF. In the present embodiment, the first holding circuit 204 is provided for each of the plurality of pixels 2.

In a period when the first reset transistor 103 is off, at least one of the first and second transfer transistors 101 and 102 operates and the photoelectric conversion circuit 100 outputs the pixel signal(s). At this timing, the source electrode of the first selection transistor 105, which is the reading node of the pixel signals, varies in voltage, and the voltage of the first bias line 3 varies through capacitive coupling. Here, the first bias line 3 is electrically connected to the gate electrode of the first transistor 203. Due to the effect of the voltage variation of the first bias line 3, the second bias voltage VB1 supplied to the gate electrode of the first transistor 203 varies from pixel to pixel, and the quality of the signals obtained from the photoelectric conversion apparatus deteriorates. This further degrades the image quality of images using the signals obtained from the photoelectric conversion apparatus.

In the present embodiment, in a period where the first reset transistor 103 is on, a sampling operation is thus performed to electrically connect the first bias line 3 to the gate electrode of the first transistor 203 and the first holding circuit 204 under the control of the first bias control circuit 201. In the period when the first reset transistor 103 is on, the voltage variation at the source electrode of the first selection transistor 105 is small as compared to the period when at least one of the first and second transfer transistors 101 and 102 is in operation. Then, in the period when the first reset transistor 103 is off, at least one of the first and second transfer transistors 101 and 102 operates and the photoelectric conversion circuit 100 outputs the pixel signal(s). At this timing, a hold operation is performed to electrically disconnect the first bias line 3 from the gate electrode of the first transistor 203 and the first holding circuit 204 under the control of the first bias control circuit 201. This prevents the second bias voltage VB 1 from varying due to the voltage variation of the first bias line 3, and variations in the pixel signals output from the plurality of pixels 2 are suppressed. In other words, the quality of the signals obtained from the photoelectric conversion apparatus improves. Since variations in the signals output from the plurality of pixels 2 are suppressed, image quality degradation of images using the signals obtained from the photoelectric conversion apparatus is reduced.

The pixel memory circuit 300 includes an N-signal transistor 301, a first S-signal transistor 302, a second S-signal transistor 303, an N-signal memory circuit 304, a first S-signal memory circuit 305, and a second S-signal memory circuit 306. The pixel memory circuit 300 also includes a second reset transistor 307, a second amplification transistor 308, and a second selection transistor 309. The pixel memory circuit 300 functions as a circuit for holding the pixel signals amplified by the pixel amplification circuit 200. As employed herein, an N-signal is a reset-level signal of the photoelectric conversion circuit 100. An S-signal is a photoelectric conversion signal of the photoelectric conversion circuit 100. The transistors included in the pixel memory circuit 300 operate based on control signals supplied from the control circuit 6.

The N-signal memory circuit 304, the first S-signal memory circuit 305, and the second S-signal memory circuit 306 each include a capacitive element (third capacitive element). The capacitive element included in each of the N-signal memory circuit 304, the first S-signal memory circuit 305, and the second S-signal memory circuit 306 desirably has a capacitance of 100 fF to 800 fF. The capacitance of the capacitive element included in each of the N-signal memory circuit 304, the first S-signal memory circuit 305, and the second S-signal memory circuit 306 is more desirably 200 fF to 600 fF. If the capacitance of the capacitive element included in each of the N-signal memory circuit 304, the first S-signal memory circuit 305, and the second S-signal memory circuit 306 is small, the held signal can leak. In view of this, the capacitances of the respective capacitive elements (third capacitive elements) are set to be greater than that of the capacitive element (first capacitive element) included in the first holding circuit 204. This can prevent the leakage of the held signals, and the quality of the signals obtained from the photoelectric conversion apparatus can be improved. Moreover, the image quality degradation of images using the signals obtained from the photoelectric conversion apparatus is reduced.

The transistors included in the pixel 2 may be N-type metal-oxidesemiconductor (MOS) transistors or P-type MOS transistors. The present embodiment deals with a case where electrons from electron-hole pairs generated in the first and second photoelectric conversion elements PD1 and PD2 by the incidence of light are used as signal charges. In the case of using electrons as the signal charges, the transistors included in the pixel 2 can be configured as N-type MOS transistors. However, the signal charges are not limited to electrons, and holes may be used as the signal charges. With holes used as the signal charges, the transistors included in the pixel 2 can be configured as P-type MOS transistors, i.e., ones of type different from that described in the present embodiment.

The amplification circuit 8 includes a second bias control circuit 401, a second cascode transistor 402, a second transistor 403, and a second holding circuit 404. The transistors included in the amplification circuit 8 operate based on control signals supplied from the control circuit 6. The second transistor 403 functions as a current source, and supplies a current to the second amplification transistor 308. The second amplification transistor 308, the second cascode transistor 402, and the second transistor 403 function as a source-follower circuit (second source-follower circuit), whereby the amplified pixel signal is output from the pixel memory circuit 300. Even without the second cascode transistor 402, the second amplification transistor 308 and the second transistor 403 function as a source-follower circuit.

The second bias output circuit 12 outputs a third bias voltage VG2, and supplies the third bias voltage VG2 to the gate electrode of the second cascode transistor 402. The second bias output circuit 12 also outputs a fourth bias voltage VB2, and supplies the fourth bias voltage VB2 to the gate electrode of the second transistor 403 via the second bias line 14 and the second bias control circuit 401.

The second holding circuit 404 is electrically connected to the gate electrode of the second transistor 403.

The second holding circuit 404 includes a capacitive element (second capacitive element), and functions as a sample-and-hold circuit. The second bias control circuit 401 controls the electrical connection of the second bias line 14 with the gate electrode of the second transistor 403 and the second holding circuit 404. In other words, the second bias control circuit 401 can be said to control the fourth bias voltage VB2. The capacitive element included in the second holding circuit 404 desirably has a capacitance of 100 fF to 800 fF. The capacitance of the capacitive element included in the second holding circuit 404 is more desirably 200 fF to 600 fF.

While the first holding circuit 204 is provided for each of the plurality of pixels 2, the second holding circuit 404 is provided for the output line 4 to which a plurality of pixels 2 disposed in each column is electrically connected. Configuring the capacitance of the capacitive element (second capacitive element) included in the second holding circuit 404 to be greater than that of the capacitive elements (first capacitive elements) included in the first holding circuits 204 can suppress characteristic variations from column to column in which the pixels 2 are arranged.

In a period when the second reset transistor 307 is off, the pixel signal held in at least one of the N-signal memory circuit 304, the first S-signal memory circuit 305, and the second S-signal memory circuit 306 is output. At this timing, the voltage of the source electrode of the second selection transistor 309 varies, and the voltage of the second bias line 14 varies through capacitive coupling. Here, the second bias line 14 is electrically connected to the gate electrode of the second transistor 403. Due to the effect of the voltage variation of the second bias line 14, the fourth bias voltage VB2 supplied to the gate electrode of the second transistor 403 varies from output line to output line, and the quality of the signals obtained from the photoelectric conversion apparatus deteriorates. This further degrades the image quality of images using the signals obtained from the photoelectric conversion apparatus.

In the present embodiment, in a period when the second reset transistor 307 is on, a sampling operation is thus performed to electrically connect the second bias line 14 to the gate electrode of the second transistor 403 and the second holding circuit 404 under the control of the second bias control circuit 401. In the period when the second reset transistor 307 is on, the voltage variation at the source electrode of the second selection transistor 309 is small as compared to the period where a pixel signal is output from at least one of the N-signal memory circuit 304, the first S-signal memory circuit 305, and the second S-signal memory circuit 306. Then, in the period when the second reset transistor 307 is off, the pixel signal(s) held in at least one of the N-signal memory circuit 304, the first S-signal memory circuit 305, and the second S-signal memory circuit 306 is/are output. At this timing, a hold operation is performed to electrically disconnect the second bias line 14 from the gate electrode of the second transistor 403 and the second holding circuit 404 under the control of the second bias control circuit 401. This prevents the fourth bias voltage VB2 from varying due to the voltage variation of the second bias line 14, whereby variations in the pixel signals output from pixels arranged in different columns are suppressed. In other words, the quality of the signals obtained from the photoelectric conversion apparatus improves. Since variations in the pixel signals output from the pixels arranged in different columns are suppressed, image quality degradation of images using the signals obtained from the photoelectric conversion apparatus is reduced.

The signal processing circuit 9 includes an AD conversion circuit 500 corresponding to each of the columns in which the plurality of pixels 2 is arranged. The third bias output circuit 13 outputs a bias voltage for operating the AD conversion circuit 500. The bias voltage output from the third bias output circuit 13 is supplied to the AD conversion circuit 500 via the third bias line 15.

The first power supply voltage line VDD1, a second power supply voltage line VDD2, and a third power supply voltage line VDD3 for supplying power supply voltages are disposed in the pixel 2, the amplification circuit 8, and the signal processing circuit 9. Moreover, the first reference voltage line GND1, a second reference voltage line GND2, and a third reference voltage line GND3 for supplying a reference voltage are disposed in the pixel 2, the amplification circuit 8, and the signal processing circuit 9. The first, second, and third power supply voltage lines VDD1, VDD2, and VDD3 may or may not be electrically connected to each other. The first, second, and third reference voltage lines GND1, GND2, and GND3 may or may not be electrically connected to each other.

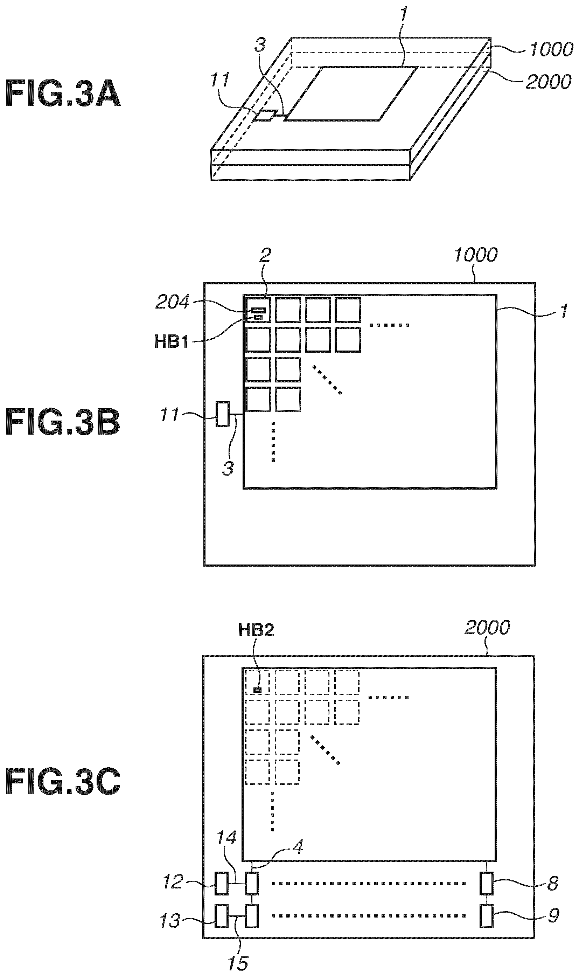

Figs. 3A, 3B, and 3C are examples of schematic diagrams illustrating the photoelectric conversion apparatus according to the present embodiment. Fig. 3A is a perspective view of the photoelectric conversion apparatus seen from the light incident surface side of the first substrate 1000. Fig. 3B is a plan view of the first substrate 1000 seen from the light incident surface of the first substrate 1000. Fig. 3C is a plan view of the second substrate 2000 seen from the light incident surface of the first substrate 1000 (second substrate 2000). As illustrated in Fig. 3A, the photoelectric conversion apparatus includes a stack of a plurality of substrates including the first and second substrates 1000 and 2000.

As illustrated in Fig. 3B, the first holding circuit 204 (first capacitive element) and the first bonding portion HB1 are disposed for each of the plurality of pixels 2. The plurality of pixels 2 is electrically connected to the second substrate 2000 via the respective first bonding portions HB1. In a plan view, at least a part of each first bonding portion HB 1 and at least a part of the pixel 2 corresponding to the first bonding portion HB1 overlap each other. Note that the layout of the first holding circuits 204 and the first bonding portions HB1 is not limited to that of Fig. 3B. In Fig. 3B, the components included in the pixels 2 other than the first holding circuit 204 are omitted. Such not-illustrated components can be disposed within the pixels 2.

As illustrated in Fig. 3C, the second bonding portion HB2 is disposed for each of the plurality of pixels 2. The plurality of amplification circuits 8 is electrically connected to the first substrate 1000 via the respective second bonding portions HB2. In a plan view, at least a part of each second bonding portion HB2 and at least a part of the first bonding portion HB1 corresponding to the second bonding portion HB2 overlap each other.

The layout of the second boding portions HB2 is not limited to that of Fig. 3C. In Fig. 3C, the components included in the amplification circuits 8 are omitted. Such not-illustrated components can be disposed within the amplification circuits 8.

In the present embodiment, the first holding circuit 204 for performing a sample-and-hold operation is disposed at the gate electrode of the first transistor 203. This improves the quality of the signals output from the photoelectric conversion apparatus. Moreover, image quality degradation of images using the signals obtained from the photoelectric conversion apparatus is reduced.

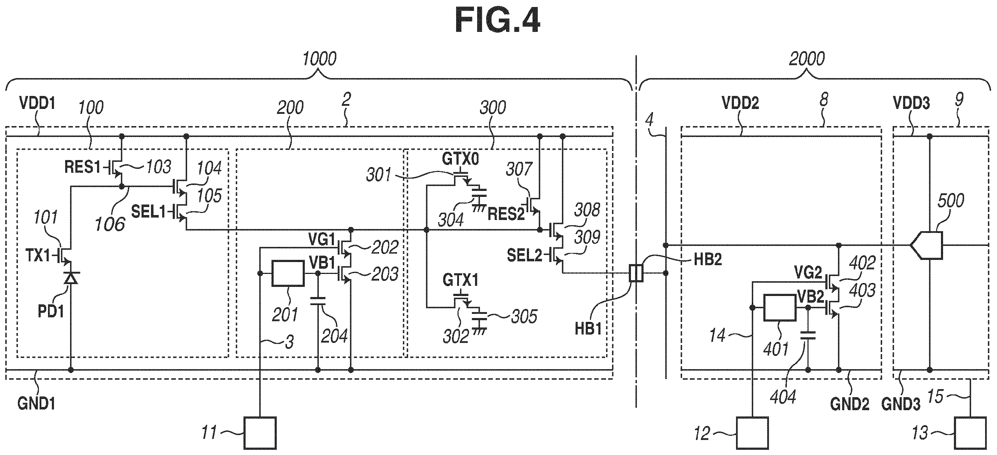

A photoelectric conversion apparatus according to a modification of the first embodiment of the present invention will be described with reference to Fig. 4. Components similar to those of the first embodiment are denoted by the same reference numerals. A description of these components may be omitted or simplified.

The modification of the first embodiment differs from the first embodiment in the configuration that each pixel 2 includes a single photoelectric conversion element instead of a plurality of photoelectric conversion elements. Fig. 4 is an example of a circuit diagram of a pixel 2, an amplification circuit 8, and a signal processing circuit 9 included in the photoelectric conversion apparatus according to this modification.

As illustrated in Fig. 4, the photoelectric conversion circuit 100 included in the pixel 2 includes the first photoelectric conversion element PD1 and the first transfer transistor 101. The pixel memory circuit 300 included in the pixel 2 includes the N-signal transistor 301, the first S-signal transistor 302, the N-signal memory circuit 304, and the first S-signal memory circuit 305. The pixel amplification circuit 200 included in the pixel 2 includes the first holding circuit 204. Like the first embodiment, the first holding circuit 204 includes the first capacitive element.

In this modification, the first holding circuit 204 for performing a sample-and-hold operation is disposed at the gate electrode of the first transistor 203. This improves the quality of signals output from the photoelectric conversion apparatus.

Moreover, image quality degradation of images using the signal obtained from the photoelectric conversion apparatus is reduced.

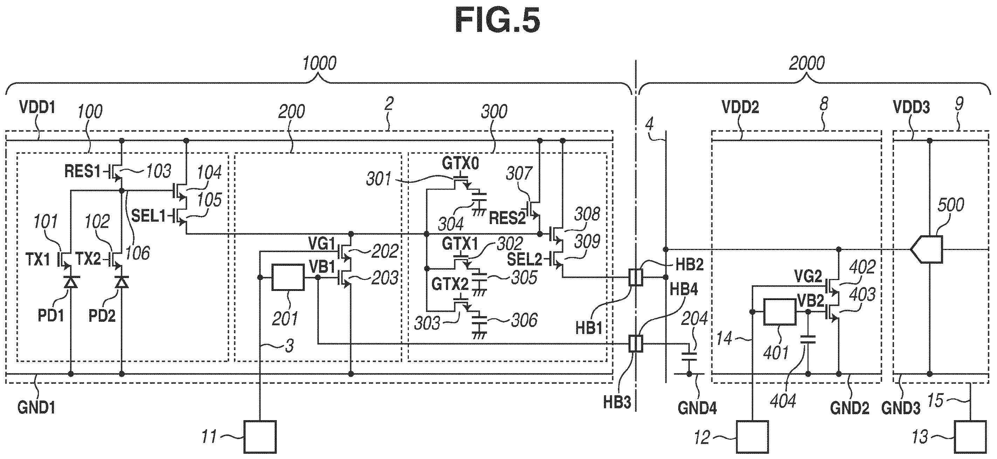

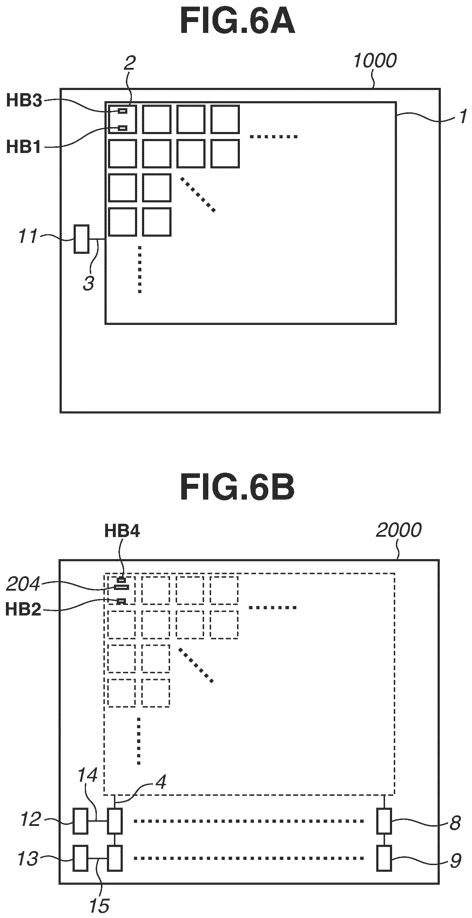

A photoelectric conversion apparatus according to a second embodiment of the present invention will be described with reference to Figs. 5, 6A, and 6B. Components similar to those of the first embodiment are denoted by the same reference numerals. A description of these components may be omitted or simplified.

The present embodiment differs from the first embodiment in that the first holding circuit 204 including the first capacitive element is disposed on the second substrate 2000. Fig. 5 is an example of a circuit diagram of a pixel 2, an amplification circuit 8, and a signal processing circuit 9 included in the photoelectric conversion apparatus according to the present embodiment. The present embodiment can be applied to both front-illuminated and back-illuminated sensors.

As illustrated in Fig. 5, a first substrate 1000 is electrically connected to the second substrate 2000 via a third bonding portion HB3 disposed on the first substrate 1000 and a fourth bonding portion HB4 disposed on the second substrate 2000. The bonding of the substrates 1000 and 2000 using the third and fourth bonding portions HB3 and HB4 is not limited to hybrid bonding. The first and second substrates 1000 and 2000 may be bonded by other methods, and electrically connected using conductive vias and bumps. In the present embodiment, the first holding circuit 204 is disposed not on the first substrate 1000 but on the second substrate 2000. The first holding circuit 204 is connected to a fourth reference voltage line GND4 and thereby supplied with a reference voltage. A first reference voltage line GND1, a second reference voltage line GND2, a third reference voltage line GND3, and the fourth reference voltage line GND4 may or may not be electrically connected to each other.

Figs. 6A and 6B are examples of schematic diagrams illustrating the photoelectric conversion apparatus according to the present embodiment. Fig. 6A is a plan view of the first substrate 1000 seen from the light incident surface of the first substrate 1000. Fig. 6B is a plan view of the second substrate 2000 seen from the light incident surface of the first substrate 1000 (second substrate 2000).

As illustrated in Fig. 6A, a first bonding portion HB1 to be bonded to a second bonding portion HB2 to be described below and the third bonding portion HB3 to be bonded to the fourth bonding portion HB4 to be described below are disposed for each of the plurality of pixels 2. The plurality of pixels 2 is electrically connected to the second substrate 2000 via the respective first bonding portions HB1 and the respective third bonding portions HB3. In a plan view, at least a part of each first bonding portion HB1 and at least a part of the pixel 2 corresponding to the first bonding portion HB 1 overlap each other. In a plan view, at least a part of each third bonding portion HB3 and at least a part of the pixel 2 corresponding to the third bonding portion HB3 overlap each other. The layout of the first and third bonding portions HB1 and HB3 is not limited to that of Fig. 6A. In Fig. 6A, components included in the pixels 2 are omitted. Such not-illustrated components can be disposed within the pixels 2.

As illustrated in Fig. 6B, the first holding circuit 204 and the second and fourth bonding portion HB2 and HB4 are disposed for each pixel 2. The plurality of amplification circuits 8 are electrically connected to the first substrate 1000 via the respective second bonding portions HB2 and the respective fourth bonding portions HB4. In a plan view, at least a part of each bonding portion HB2 and at least a part of the first bonding portion HB1 corresponding to the second bonding portion HB2 overlap each other.

In a plan view, at least a part of each fourth bonding portion HB4 and at least a part of the third bonding portion HB3 corresponding to the fourth bonding portion HB4 overlap each other. The layout of the first holding circuits 204 and the second and fourth bonding portions HB2 and HB4 is not limited to that of Fig. 6B. In Fig. 6B, components included in the amplification circuits 8 are omitted. Such not-illustrated components can be disposed within the amplification circuits 8.

In the present embodiment, the first holding circuit 204 for performing a sample-and-hold operation is disposed at the gate electrode of the first transistor 203. This improves the quality of signals output from the photoelectric conversion apparatus. Moreover, image quality degradation of images using the signals obtained from the photoelectric conversion apparatus is reduced.

In the present embodiment, the first holding circuits 204 are disposed on the second substrate 2000. This allows for an increase in the area of the pixel array 1 disposed on the first substrate 1000 as compared to the first embodiment. The use efficiency of the incident light can thus be improved, and the performance of the photoelectric conversion apparatus improves.

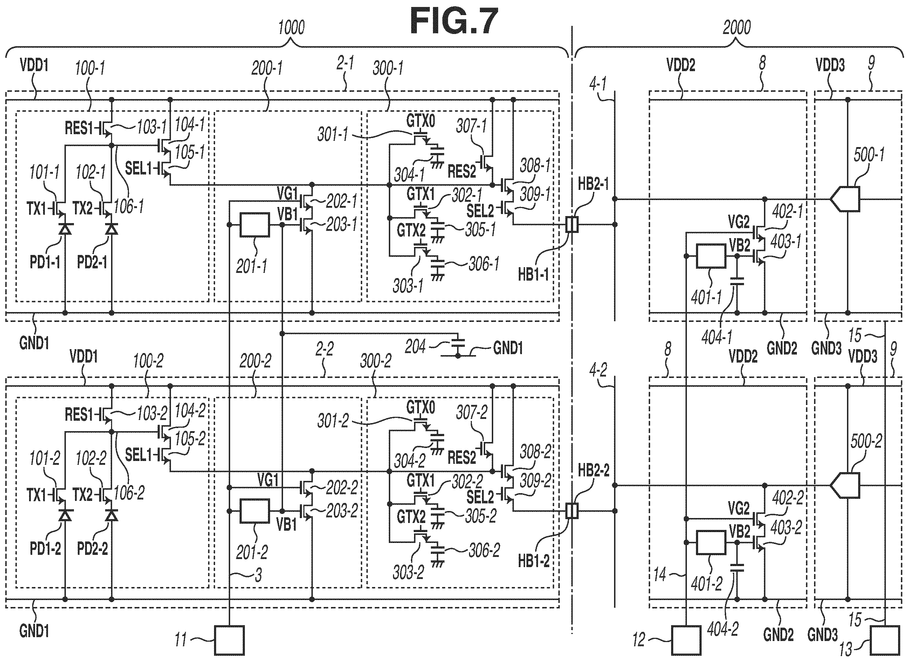

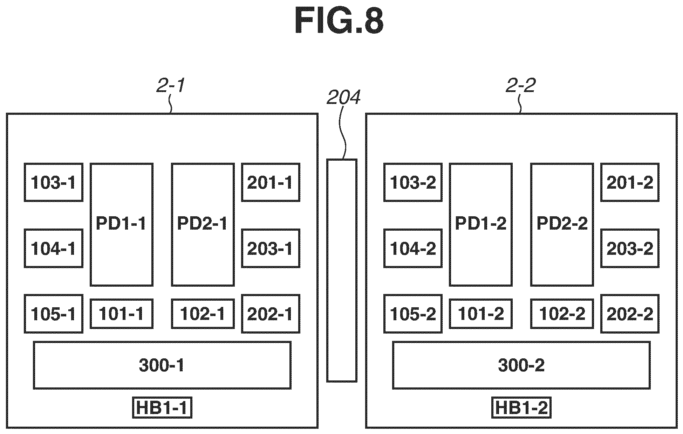

A photoelectric conversion apparatus according to a third embodiment of the present invention will be described with reference to Figs. 7 and 8. Components similar to those of the first and second embodiments are denoted by the same reference numerals. A description of these components may be omitted or simplified.

The present embodiment differs from the first and second embodiments in that a first holding circuit 204 is shared by two pixels 2. Fig. 7 is an example of a circuit diagram of pixels 2, amplification circuits 8, and signal processing circuits 9 included in the photoelectric conversion apparatus according to the present embodiment. The present embodiment can be applied to both front-illuminated and back-illuminated sensors.

Fig. 7 illustrates pixels 2 for two columns, arranged in the same row (a first pixel 2-1 disposed in a first column and a second pixel 2-2 disposed in a second column). Fig. 7 also illustrates amplification circuits 8 for two columns (a first amplification circuit 8-1 disposed in the first column and a second amplification circuit 8-2 disposed in the second column). Fig. 7 also illustrates AD conversion circuits 500 for two columns (a first AD conversion circuit 500-1 disposed in the first column and a second AD conversion circuit 500-2 disposed in the second column). To distinguish the components disposed in the first column and second column from each other, identification numbers (1 and 2) are attached at the ends of the reference numerals of the components. In the following description, if components disposed in different columns are to be distinguished from each other, the identification numbers are attached at the ends of the reference numerals of the components. By contrast, if components disposed in different columns do not need to be distinguished from each other, the identification numbers at the ends of the reference numerals of the components may be omitted.

As illustrated in Fig. 7, the first and second pixels 2-1 and 2-2 share the first holding circuit 204. The first and second columns may be adjoining ones.

Fig. 8 is an example of a plan view of the pixels 2 included in the photoelectric conversion apparatus according to the present embodiment.

As illustrated in Fig. 8, in a plan view, the first holding circuit 204 is located between the first and second pixels 2-1 and 2-2. Specifically, in a plan view, the first holding circuit 204 may be located between a first photoelectric conversion element PD1-1 and a first photoelectric conversion element PD1-2. Specifically, in a plan view, the first holding circuit 204 may be located between a second photoelectric conversion element PD2-1 and a second photoelectric conversion element PD2-2. Specifically, in a plan view, the first holding circuit 204 may be located between a first transfer transistor 101-1 and a first transfer transistor 101-2. Specifically, in a plan view, the first holding circuit 204 may be located between a second transfer transistor 102-1 and a second transfer transistor 102-2. Specifically, in a plan view, the first holding circuit 204 may be located between a first reset transistor 103-1 and a first reset transistor 103-2. Specifically, in a plan view, the first holding circuit 204 may be located between a first amplification transistor 104-1 and a first amplification transistor 104-2. Specifically, in a plan view, the first holding circuit 204 may be located between a first selection transistor 105-1 and a first selection transistor 105-2. Specifically, in a plan view, the first holding circuit 204 may be located between a first bias control circuit 201-1 and a first bias control circuit 201-2. Specifically, in a plan view, the first holding circuit 204 may be located between a first cascode transistor 202-1 and a first cascode transistor 202-2. Specifically, in a plan view, the first holding circuit 204 may be located between a first transistor 203-1 and a first transistor 203-2. Specifically, in a plan view, the first holding circuit 204 may be located between a pixel memory circuit 300-1 and a pixel memory circuit 300-2. In a plan view, the first holding circuit 204 may be located between a first bonding portion HB 1-1 and a first bonding portion HB1-2.

In the present embodiment, the first holding circuit 204 for performing a sample-and-hold operation is disposed at the gate electrodes of the first transistors 203. This improves the quality of signals output from the photoelectric conversion apparatus. Moreover, image quality degradation of images using the signals obtained from the photoelectric conversion apparatus is reduced.

Furthermore, in the present embodiment, a first holding circuit 204 is shared by two pixels 2. This allows for an increase in the area of at least one of the photoelectric conversion circuits 100 and the pixel memory circuits 300 disposed on the first substrate 1000. If the area of the photoelectric conversion circuits 100 is increased, the use efficiency of the incident light can be improved, and the performance of the photoelectric conversion apparatus improves. If the area of the pixel memory circuits 300 is increased, leakage from the capacitive elements included in the pixel memory circuits 300 can be reduced, and the performance of the photoelectric conversion apparatus improves.

While the present embodiment is configured so that a plurality of pixels 2 disposed in two columns share one first holding circuit 204, a plurality of pixels 2 disposed in three or more columns may share one first holding circuit 204.

The first holding circuit 204 may be shared not by pixels 2 for two columns, arranged in the same row but by pixels 2 for two rows (first row and second row), arranged in the same column. In such a case, the pixels 2 for two rows, arranged in the same column are electrically connected to one amplification circuit 8 and one AD conversion circuit 500. In such a case, the first and second rows may be adjoining ones.

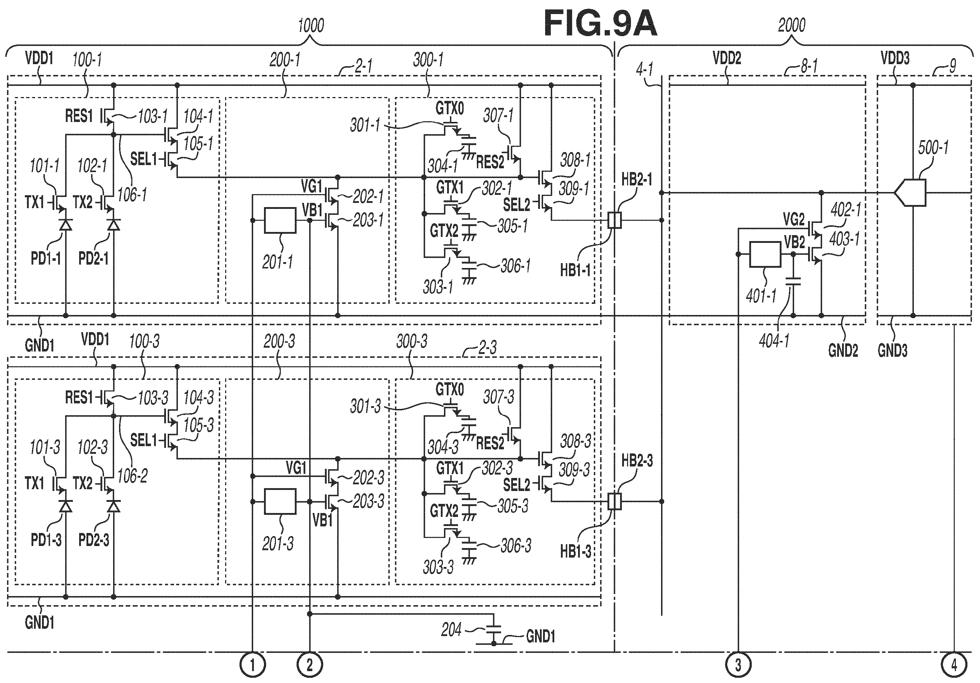

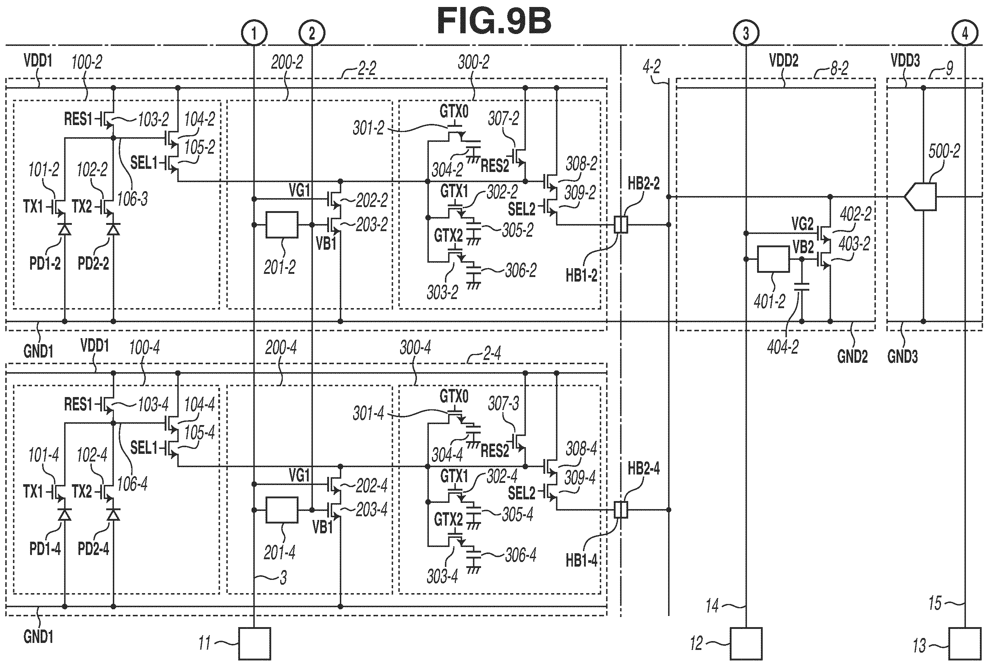

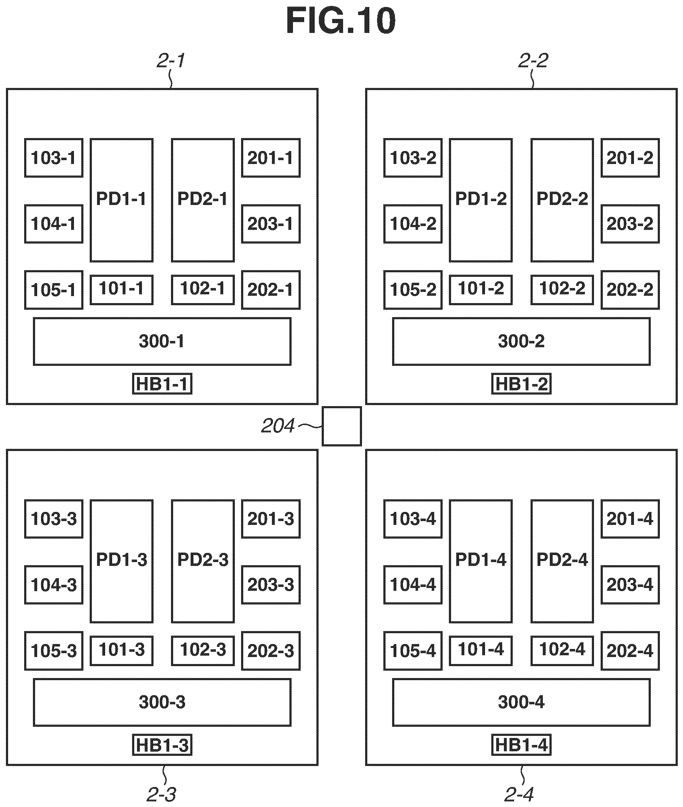

A photoelectric conversion apparatus according to a fourth embodiment of the present invention will be described with reference to Figs. 9A, 9B, and 10. Components similar to those of the first to third embodiments are denoted by the same reference numerals. A description of these components may be omitted or simplified.

The present embodiment differs from the first to third embodiments in that a first holding circuit 204 is shared by four pixels 2. Figs. 9A and 9B are an example of a circuit diagram of pixels 2, amplification circuits 8, and signal processing circuits 9 included in the photoelectric conversion apparatus according to the present embodiment. The present embodiment can be applied to both front-illuminated and back-illuminated sensors.

Figs. 9A and 9B illustrate a first pixel 2-1 arranged at a first row and a first column, a second pixel 2-2 arranged at the first row and a second column, a third pixel 2-3 arranged at a second row and the first column, and a fourth pixel 2-4 arranged at the second row and the second column. Figs. 9A and 9B also illustrate a first amplification circuit 8-1 disposed in the first column and a second amplification circuit 8-2 disposed in the second column. Figs. 9A and 9B also illustrate a first AD conversion circuit 500-1 disposed in the first column and a second AD conversion circuit 500-2 disposed in the second column. To distinguish the components arranged at the first row and first column, the first row and second column, the second row and first column, and the second row and second column from each other, identification numbers (1, 2, 3, and 4) are attached at the ends of the reference numerals of the components. In the following description, if components disposed in different rows or columns are to be distinguished from each other, identification numbers are attached at the ends of the reference numerals of the components. By contrast, if components disposed in different rows or columns do not need to be distinguished from each other, the identification numbers at the ends of the reference numerals of the components may be omitted.

As illustrated in Figs. 9A and 9B, the first, second, third, and fourth pixels 2-1, 2-2, 2-3, and 2-4 share the first holding circuit 204. The first and second columns may be adjoining ones. The first and second rows may be adjoining ones.

Fig. 10 is an example of a plan view of the pixels 2 included in the photoelectric conversion apparatus according to the present embodiment.

As illustrated in Fig. 10, in a plan view, the first holding circuit 204 is located in a region surrounded by the first, second, third, and fourth pixels 2-1, 2-2, 2-3, and 2-4.

Specifically, in a plan view, the first holding circuit 204 may be located in a region surrounded by a first photoelectric conversion element PD1-1, a first photoelectric conversion element PD1-2, a first photoelectric conversion element PD1-3, and a first photoelectric conversion element PD1-4. Specifically, in a plan view, the first holding circuit 204 may be located in a region surrounded by a second photoelectric conversion element PD2-1, a second photoelectric conversion element PD2-2, a second photoelectric conversion element PD2-3, and a second photoelectric conversion element PD2-4. Specifically, in a plan view, the first holding circuit 204 may be located in a region surrounded by a first transfer transistor 101-1, a first transfer transistor 101-2, a first transfer transistor 101-3, and a first transfer transistor 101-4. Specifically, in a plan view, the first holding circuit 204 may be located in a region surrounded by a second transfer transistor 102-1, a second transfer transistor 102-2, a second transfer transistor 102-3, and a second transfer transistor 102-4. Specifically, in a plan view, the first holding circuit 204 may be located in a region surrounded by a first reset transistor 103-1, a first reset transistor 103-2, a first reset transistor 103-3, and a first reset transistor 103-4. Specifically, in a plan view, the first holding circuit 204 is located in a region surrounded by a first amplification transistor 104-1, a first amplification transistor 104-2, a first amplification transistor 104-3, and a first amplification transistor 104-4. Specifically, in a plan view, the first holding circuit 204 is located in a region surrounded by a first selection transistor 105-1, a first selection transistor 105-2, a first selection transistor 105-3, and a first selection transistor 105-4. Specifically, in a plan view, the first holding circuit 204 is located in a region surrounded by a first bias control circuit 201-1, a first bias control circuit 201-2, a first bias control circuit 201-3, and a first bias control circuit 201-4. Specifically, in a plan view, the first holding circuit 204 may be located in a region surrounded by a first cascode transistor 202-1, a first cascode transistor 202-2, a first cascode transistor 202-3, and a first cascode transistor 202-4. Specifically, in a plan view, the first holding circuit 204 may be located in a region surrounded by a first transistor 203-1, a first transistor 203-2, a first transistor 203-3, and a first transistor 203-4. Specifically, in a plan view, the first holding circuit 204 may be located in a region surrounded by a pixel memory circuit 300-1, a pixel memory circuit 300-2, a pixel memory circuit 300-3, and a pixel memory circuit 300-4. In a plan view, the first holding circuit 204 may be located in a region surrounded by a first bonding portion HB1-1, a first bonding portion HB1-2, a first bonding portion HB1-3, and a first bonding portion HB1-4.

In the present embodiment, the first holding circuit 204 for performing a sample-and-hold operation is disposed at the gate electrodes of the first transistors 203. This improves the quality of signals output from the photoelectric conversion apparatus. Moreover, image quality degradation of images using the signals obtained from the photoelectric conversion apparatus is reduced.

Furthermore, in the present embodiment, a first holding circuit 204 is shared by four pixels 2. This allows for an increase in the area of at least one of the photoelectric conversion circuits 100 and the pixel memory circuits 300 disposed on the first substrate 1000. If the area of the photoelectric conversion circuits 100 is increased, the use efficiency of the incident light can be improved, and the performance of the photoelectric conversion apparatus improves. If the area of the pixel memory circuits 300 is increased, leakage from the capacitive elements included in the pixel memory circuits 300 can be reduced, and the performance of the photoelectric conversion apparatus improves.

While the present embodiment is configured so that a plurality of pixels 2 disposed in two rows and two columns share a first holding circuit 204, a plurality of pixels 2 disposed in a matrix of more than two rows and two columns may share a first holding circuit 204. Examples of the matrix of more than two rows and two columns include two rows and three columns, three rows and two columns, and three rows and three columns.

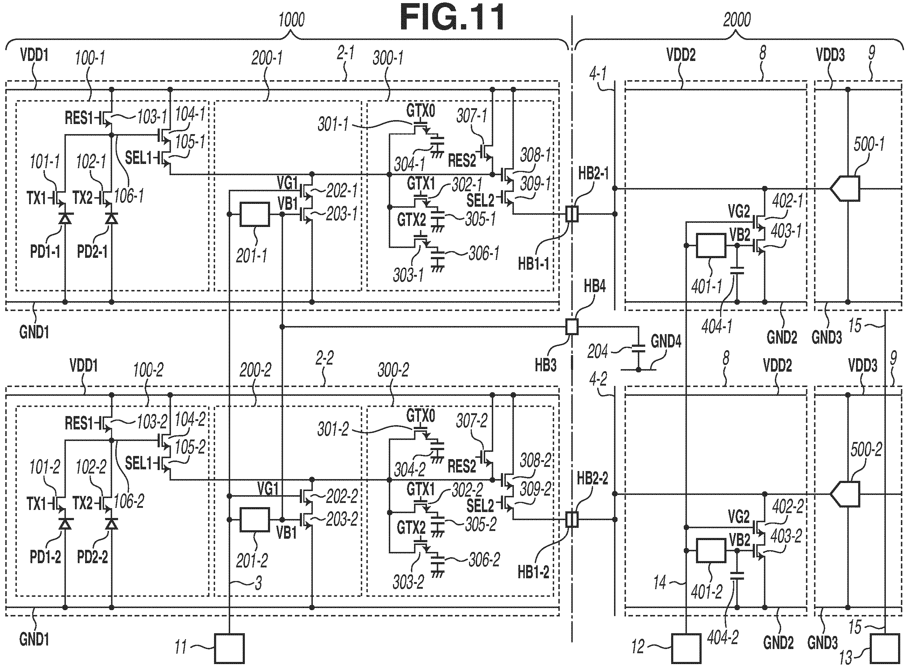

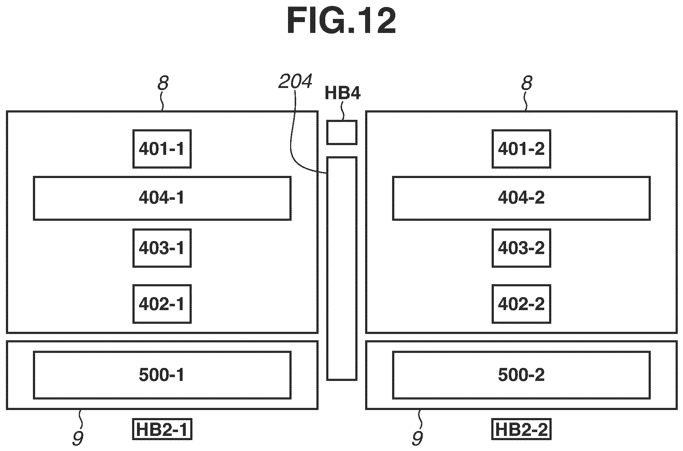

A photoelectric conversion apparatus according to a fifth embodiment of the present invention will be described with reference to Figs. 11 and 12. Components similar to those of the first to fourth embodiments are denoted by the same reference numerals. A description of these components may be omitted or simplified.

The present embodiment is a combination of the second and third embodiments.

Fig. 11 is an example of a circuit diagram of pixels 2, amplification circuits 8, and signal processing circuits 9 included in the photoelectric conversion apparatus according to the present embodiment. The present embodiment can be applied to both front-illuminated and back-illuminated sensors.

As illustrated in Fig. 11, a first holding circuit 204 is disposed on a second substrate 2000. A first pixel 2-1 and a second pixel 2-2 share the first holding circuit 204.

Fig. 12 is an example of a plan view of the amplification circuits 8 and the signal processing circuits 9 included in the photoelectric conversion apparatus according to the present embodiment.

As illustrated in Fig. 12, in a plan view, the first holding circuit 204 is located between the amplification circuit 8 corresponding to the first pixel 2-1 and the amplification circuit 8 corresponding to the second pixel 2-2. Specifically, in a plan view, the first holding circuit 204 may be located between a second bias control circuit 401-1 and a second bias control circuit 401-2. Specifically, in a plan view, the first holding circuit 204 may be located between a second cascode transistor 402-1 and a second cascode transistor 402-2. Specifically, in a plan view, the first holding circuit 204 may be located between a second transistor 403-1 and a second transistor 403-2. Specifically, in a plan view, the first holding circuit 204 may be located between a second holding circuit 404-1 and a second holding circuit 404-2. In a plan view, the first holding circuit 204 may be located between an AD conversion circuit 500-1 and an AD conversion circuit 500-2. In a plan view, the first holding circuit 204 may be located between a second bonding portion HB2-1 and a second bonding portion HB2-2.

In the present embodiment, the first holding circuit 204 for performing a sample-and-hold operation is disposed at the gate electrodes of the first transistors 203. This improves the quality of signals output from the photoelectric conversion apparatus. Moreover, image quality degradation of images using the signals obtained from the photoelectric conversion apparatus is reduced.

Furthermore, in the present embodiment, the first holding circuit 204 is disposed on the second substrate 2000. This allows for an increase in the area of the pixel array 1 disposed on the first substrate 1000. The use efficiency of the incident light can thereby be improved, and the performance of the photoelectric conversion apparatus improves.

In the present embodiment, a first holding circuit 204 is shared by two pixels 2. This allows for an increase in the area of at least the photoelectric conversion circuits 100 and the pixel memory circuits 300 disposed on the first substrate 1000. If the area of the photoelectric conversion circuits 100 is increased, the use efficiency of the incident light can be improved, and the performance of the photoelectric conversion apparatus improves. If the area of the pixel memory circuits 300 is increased, leakage from the capacitive elements included in the pixel memory circuits 300 can be reduced, and the performance of the photoelectric conversion apparatus improves.

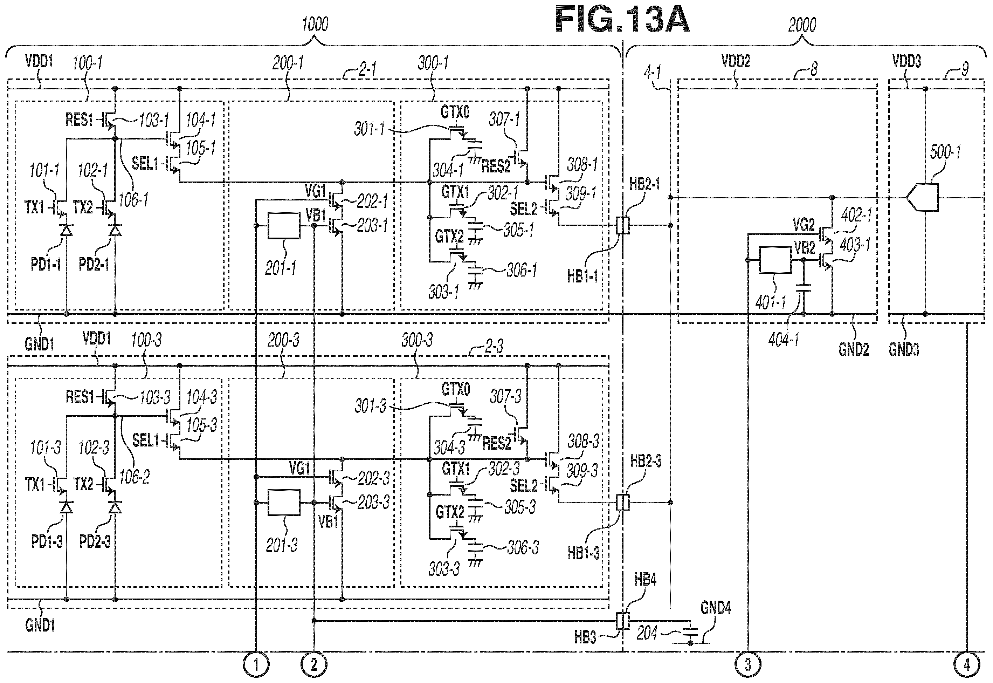

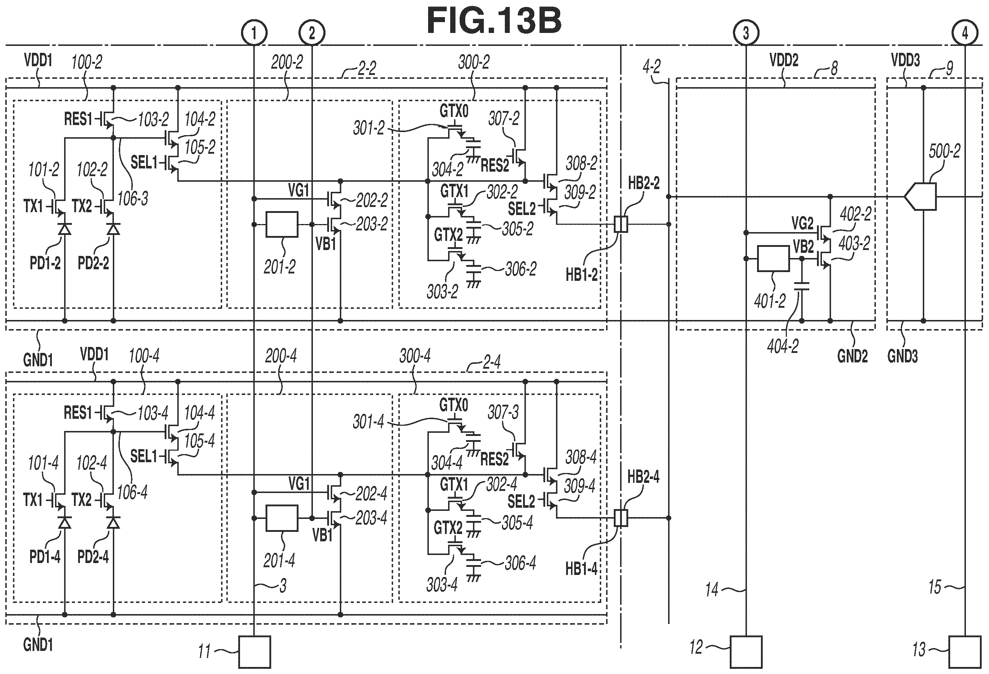

A photoelectric conversion apparatus according to a sixth embodiment of the present invention will be described with reference to Figs. 13A and 13B. Components similar to those of the first to fifth embodiments are denoted by the same reference numerals. A description of these components may be omitted or simplified.

The present embodiment is a combination of the second and fourth embodiments.

Figs. 13A and 13B are an example of a circuit diagram of pixels 2, amplification circuits 8, and signal processing circuits 9 included in the photoelectric conversion apparatus according to the present embodiment. The present embodiment can be applied to both front-illuminated and back-illuminated sensors.

As illustrated in Figs. 13A and 13B, a first holding circuit 204 is disposed on a second substrate 2000. A first pixel 2-1, a second pixel 2-2, a third pixel 2-3, and a fourth pixel 2-4 share the first holding circuit 204.

In the present embodiment, the first holding circuit 204 for performing a sample-and-hold operation is disposed at the gate electrodes of the first transistors 203. This improves the quality of signals output from the photoelectric conversion apparatus. Moreover, image quality degradation of images using the signals obtained from the photoelectric conversion apparatus is reduced.

Furthermore, in the present embodiment, the first holding circuit 204 is disposed on the second substrate 2000. This allows for an increase in the area of the pixel array 1 disposed on the first substrate 1000. The use efficiency of the incident light can thus be improved, and the performance of the photoelectric conversion apparatus improves.

In the first embodiment, a first holding circuit 204 is shared by four pixels 2. This allows for an increase in the area of at least one of the photoelectric conversion circuits 100 and the pixel memory circuits 300 disposed on the first substrate 1000. If the area of the photoelectric conversion circuits 100 is increased, the use efficiency of the incident light can be improved, and the performance of the photoelectric conversion apparatus improves. If the area of the pixel memory circuits 300 is increased, leakage from the capacitive elements included in the pixel memory circuits 300 can be reduced, and the performance of the photoelectric conversion apparatus improves.

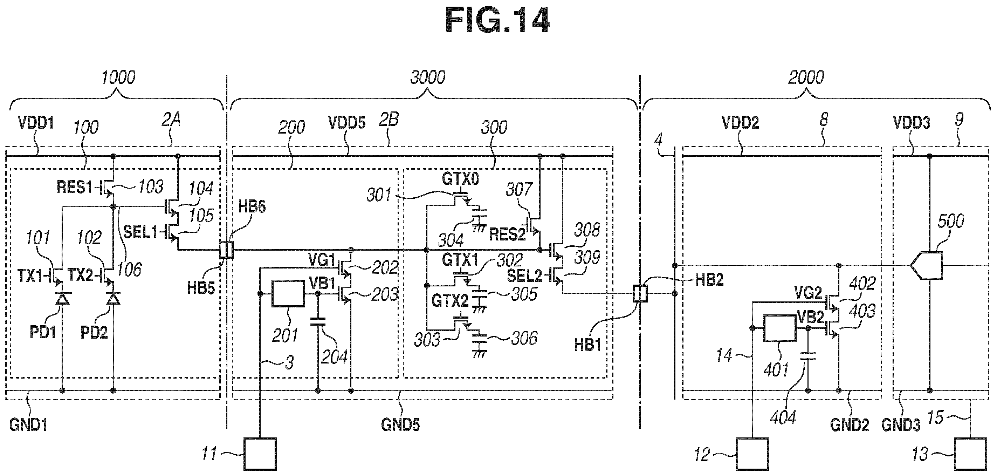

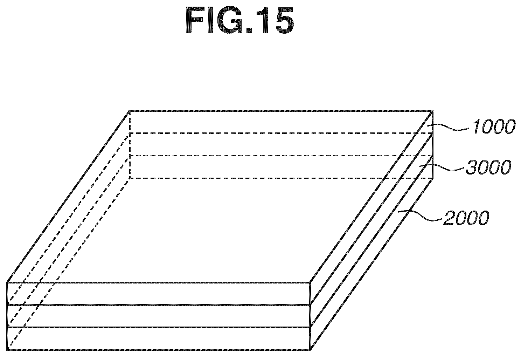

A photoelectric conversion apparatus according to a seventh embodiment of the present invention will be described with reference to Figs. 14 and 15. Components similar to those of the first to sixth embodiments are denoted by the same reference numerals. A description of these components may be omitted or simplified.

The present embodiment differs from the first to sixth embodiments in that a third substrate 3000 is included in addition to the first and second substrates 1000 and 2000. Fig. 14 is an example of a circuit diagram of a pixel 2, an amplification circuit 8, and a signal processing circuit 9 included in the photoelectric conversion apparatus according to the present embodiment. The present embodiment can be applied to both front-illuminated and back-illuminated sensors.

As illustrated in Fig. 14, the photoelectric conversion apparatus includes three substrates, namely, the first substrate 1000, the second substrate 2000, and the third substrate 3000. The photoelectric conversion apparatus has a three-dimensional structure constituted by laminating the three substrates 1000, 2000, and 3000. The first and third substrates 1000 and 3000 are stacked by hybrid bonding, for example. The first substrate 1000 is electrically connected to the third substrate 3000 via a fifth bonding portion HB5 disposed on the first substrate 1000 and a sixth bonding portion HB6 disposed on the third substrate 3000. The bonding of the substrates 1000 and 3000 using the fifth and sixth bonding portions HB5 and HB6 is not limited to hybrid bonding. The first and third substrates 1000 and 3000 may be bonded by other methods, and electrically connected using conductive vias and bumps. In the present embodiment, a pixel 2A, which is a part of the pixel 2, is disposed on the first substrate 1000. The amplification circuit 8, the signal processing circuit 9, an output circuit 10, a second bias output circuit 12, and a third bias output circuit 13 are disposed on the second substrate 2000. A first bias output circuit 11 and a pixel 2B, which is the other part of the pixel 2, are disposed on the third substrate 3000. The first, second, and third substrates 1000, 2000, and 3000 each may be a semiconductor substrate such as a silicon substrate.

Fig. 15 is an example of a schematic diagram illustrating the photoelectric conversion apparatus according to the present embodiment. Fig. 15 is a perspective view of the photoelectric conversion apparatus seen from the light incident surface side of the first substrate 1000. As illustrated in Fig. 15, the photoelectric conversion apparatus is configured so that a plurality of substrates including the first, second, and third substrates 1000, 2000, and 3000 is stacked on each other.

In the present embodiment, the first holding circuit 204 for performing a sample-and-hold operation is disposed at the gate electrode of the first transistor 203. This improves the quality of signals output from the photoelectric conversion apparatus. Moreover, image quality degradation of images using the signals obtained from the photoelectric conversion apparatus is reduced.

Furthermore, in the present embodiment, the pixel 2 is divided into the pixels 2A and 2B, which are disposed on respective different substrates. This allows for an increase in the area of the photoelectric conversion circuit 100 and the pixel memory circuit 300. The increase in the area of the photoelectric conversion circuit 100 can improve the use efficiency of the incident light, and the performance of the photoelectric conversion apparatus improves. The increase in the area of the pixel memory circuit 300 can reduce leakage from the capacitive elements included in the pixel memory circuit 300, and the performance of the photoelectric conversion apparatus improves.

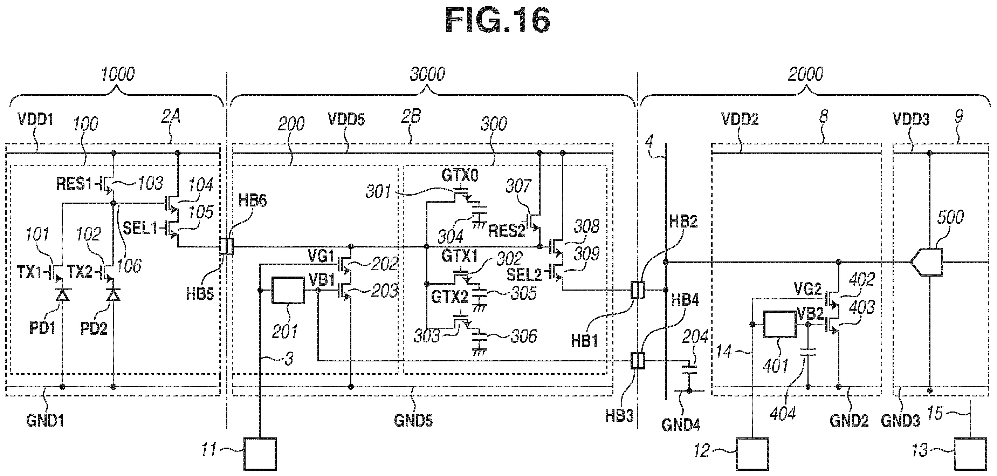

A photoelectric conversion apparatus according to an eighth embodiment of the present invention will be described with reference to Fig. 16. Components similar to those of the first to seventh embodiments are denoted by the same reference numerals. A description of these components may be omitted or simplified.

The present embodiment is a combination of the second and seventh embodiments.

Fig. 16 is an example of a circuit diagram of a pixel 2, an amplification circuit 8, and a signal processing circuit 9 included in the photoelectric conversion apparatus according to the present embodiment. The present embodiment can be applied to both front-illuminated and back-illuminated sensors.

As illustrated in Fig. 16, a first holding circuit 204 is disposed on a second substrate 2000. A pixel 2A, which is a part of the pixel 2, is disposed on a first substrate 1000. A first bias output circuit 11 and a pixel 2B, which is the other part of the pixel 2, are disposed on a third substrate 3000.

In the present embodiment, the first holding circuit 204 for performing a sample-and-hold operation is disposed at the gate electrode of the first transistor 203. This improves the quality of signals output from the photoelectric conversion apparatus. Moreover, image quality degradation of images using the signals obtained from the photoelectric conversion apparatus is reduced.

Furthermore, in the present embodiment, the pixel 2 is divided into the pixels 2A and 2B, which are disposed on respective different substrates. This allows for an increase in the area of the photoelectric conversion circuit 100 and the pixel memory circuit 300. The increase in the area of the photoelectric conversion circuit 100 can improve the use efficiency of the incident light, and the performance of the photoelectric conversion apparatus improves. The increase in the area of the pixel memory circuit 300 can reduce leakage from the capacitive elements included in the pixel memory circuit 300, and the performance of the photoelectric conversion apparatus improves.

In the present embodiment, the first holding circuit 204 is disposed on the second substrate 2000. This allows for an increase in the area of the pixel memory circuit 300 disposed on the third substrate 3000. Leakage from the capacitive elements included in the pixel memory circuit 300 can thus be reduced, and the performance of the photoelectric conversion apparatus improves.

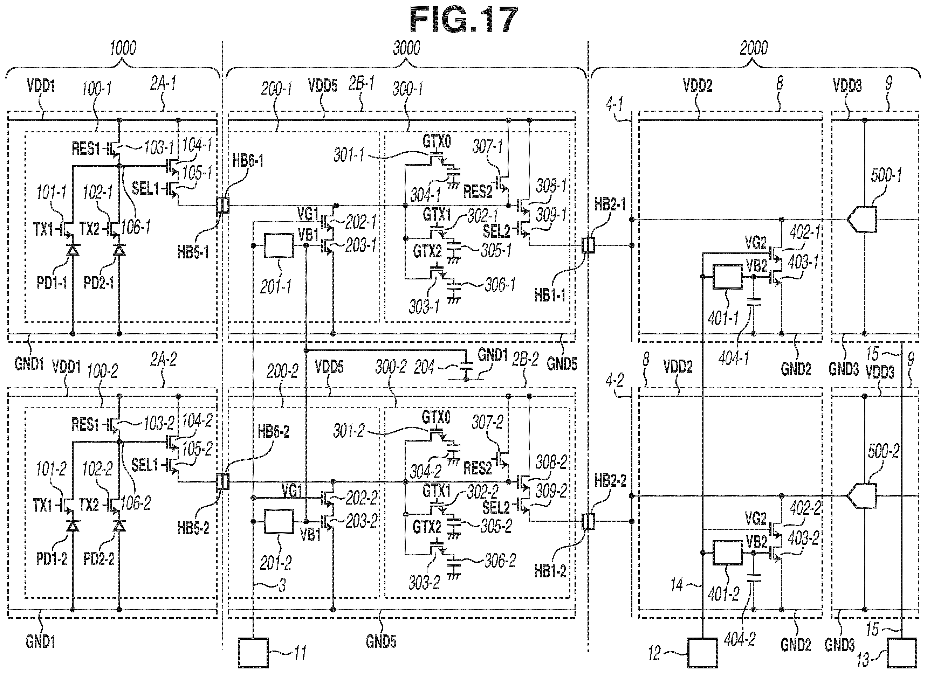

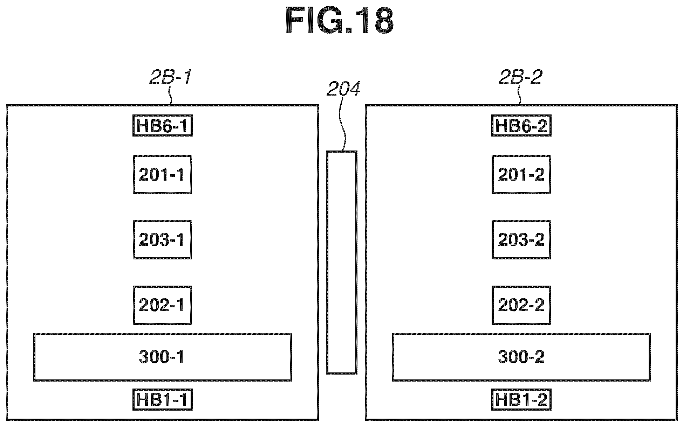

A photoelectric conversion apparatus according to a ninth embodiment of the present invention will be described with reference to Figs. 17 and 18. Components similar to those of the first to eighth embodiments are denoted by the same reference numerals. A description of these components may be omitted or simplified.

The present embodiment is a combination of the third and seventh embodiments.

Fig. 17 is an example of a circuit diagram of pixels 2, amplification circuits 8, and signal processing circuits 9 included in the photoelectric conversion apparatus according to the present embodiment. The present embodiment can be applied to both front-illuminated and back-illuminated sensors.

As illustrated in Fig. 17, a first pixel 2-1 and a second pixel 2-2 share a first holding circuit 204. Pixels 2A-1 and 2A-2, which are parts of the pixels 2, are disposed on a first substrate 1000. A first bias output circuit 11 and pixels 2B-1 and 2B-2, which are the other parts of the pixels 2, are disposed on a third substrate 3000.

Fig. 18 is an example of a plan view of the pixels 2B included in the photoelectric conversion apparatus according to the present embodiment.

As illustrated in Fig. 18, in a plan view, the first holding circuit 204 is located between the first pixel 2B-1 and the second pixel 2B-2. Specifically, in a plan view, the first holding circuit 204 may be located between a first bias control circuit 201-1 and a first bias control circuit 201-2. Specifically, in a plan view, the first holding circuit 204 may be located between a first cascode transistor 202-1 and a first cascode transistor 202-2. Specifically, in a plan view, the first holding circuit 204 may be located between a first transistor 203-1 and a first transistor 203-2. Specifically, in a plan view, the first holding circuit 204 may be located between a pixel memory circuit 300-1 and a pixel memory circuit 300-2. In a plan view, the first holding circuit 204 may be located between a first bonding portion HB1-1 and a first bonding portion HB1-2. In a plan view, the first holding circuit 204 may be located between a sixth bonding portion HB6-1 and a sixth bonding portion HB6-2.

In the present embodiment, the first holding circuit 204 for performing a sample-and-hold operation is disposed at the gate electrodes of the first transistors 203. This improves the quality of signals output from the photoelectric conversion apparatus. Moreover, image quality degradation of images using the signals obtained from the photoelectric conversion apparatus is reduced.

Furthermore, in the present embodiment, the pixels 2 are divided into the pixels 2A and 2B, which are disposed on respective different substrates. This allows for an increase in the area of the photoelectric conversion circuits 100 and the pixel memory circuits 300. The increase in the area of the photoelectric conversion circuits 100 can improve the use efficiency of the incident light, and the performance of the photoelectric conversion apparatus improves. The increase in the area of the pixel memory circuits 300 can reduce leakage from the capacitive elements included in the pixel memory circuits 300, and the performance of the photoelectric conversion apparatus improves.

In the present embodiment, a first holding circuit 204 is shared by two pixels 2. This allows for an increase in the areas of the pixel memory circuits 300 disposed on the third substrate 3000. Leakage from the capacitive elements included in the pixel memory circuits 300 can thus be reduced, and the performance of the photoelectric conversion apparatus improves.

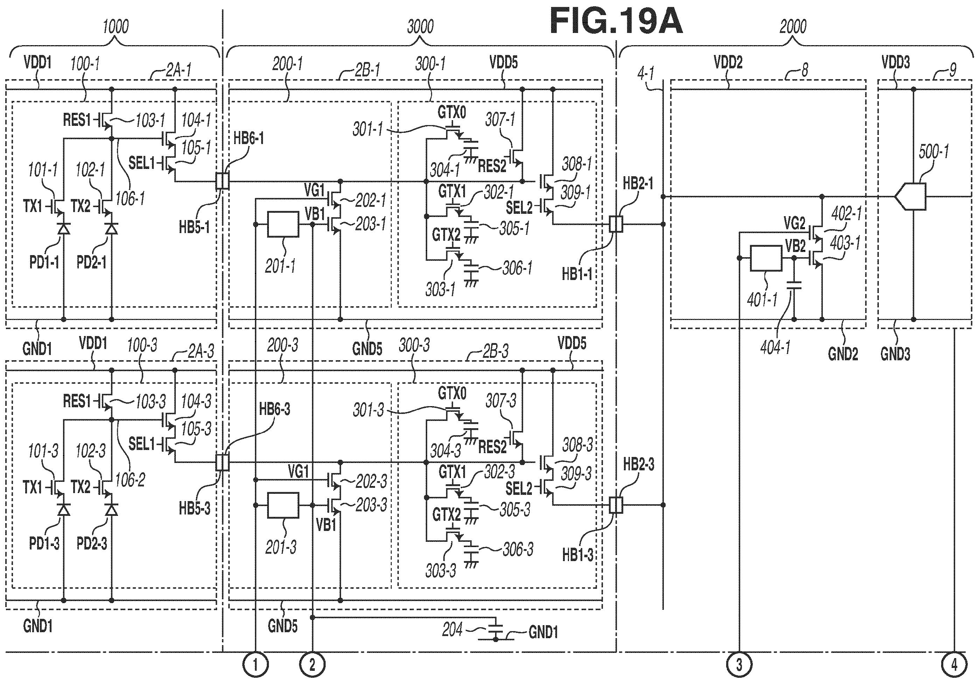

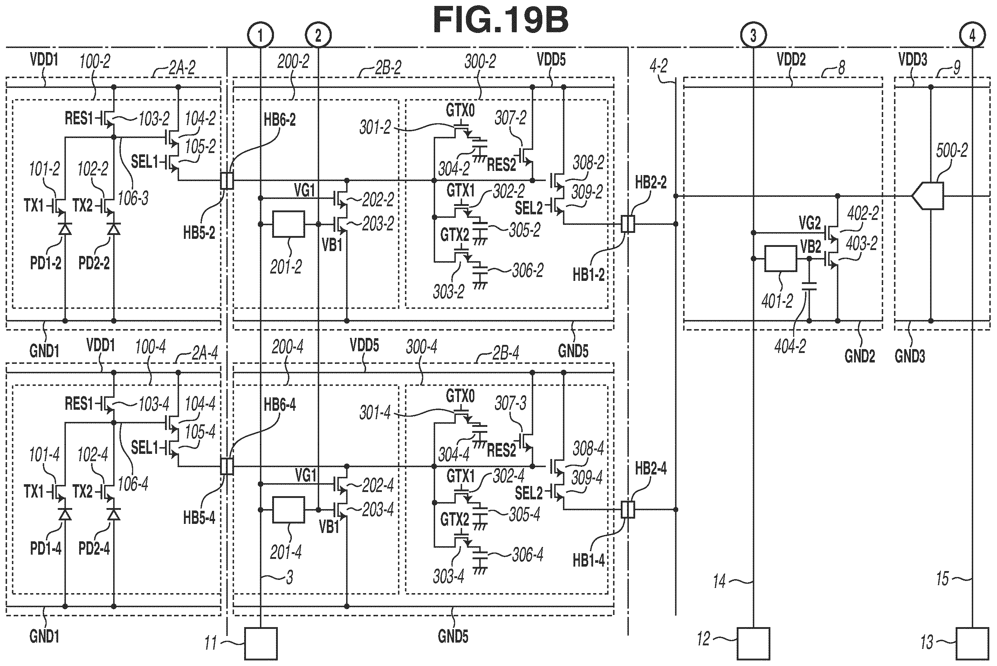

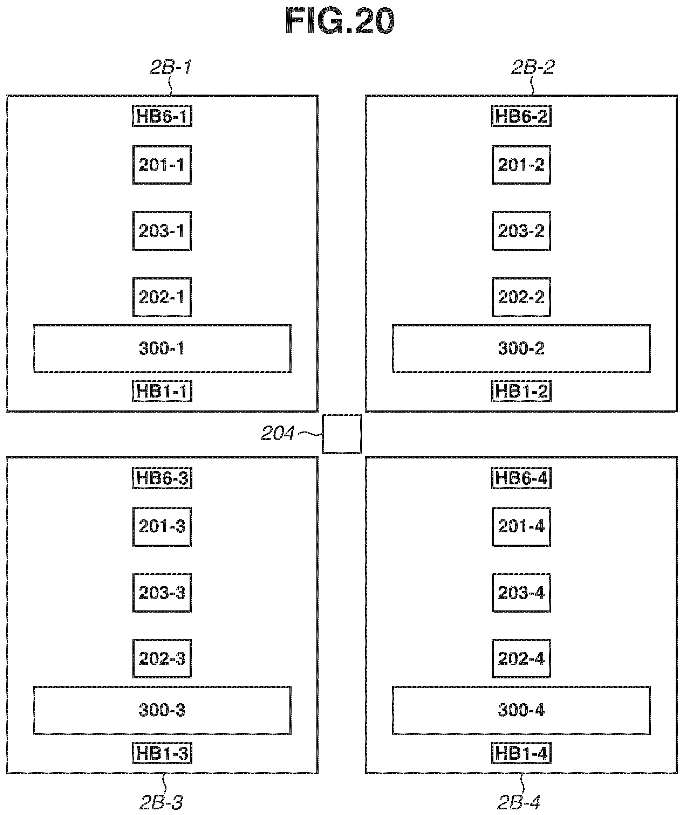

A photoelectric conversion apparatus according to a tenth embodiment of the present invention will be described with reference to Figs. 19A, 19B, and 20. Components similar to those of the first to ninth embodiments are denoted by the same reference numerals. A description of these components may be omitted or simplified.

The present embodiment is a combination of the fourth and seventh embodiments.

Figs. 19A and 19B are an example of a circuit diagram of pixels 2, amplification circuits 8, and signal processing circuits 9 included in the photoelectric conversion apparatus according to the present embodiment. The present embodiment can be applied to both front-illuminated and back-illuminated sensors.

As illustrated in Figs. 19A and 19B, a first pixel 2-1, a second pixel 2-2, a third pixel 2-3, and a fourth pixel 2-4 share a first holding circuit 204. Pixels 2A-1, 2A-2, 2A-3, and 2A-4, which are parts of the pixels 2, are disposed on a first substrate 1000.

A first bias output circuit 11 and pixels 2B-1, 2B-2, 2B-3, and 2B-4, which are the other parts of the pixels 2, are disposed on a third substrate 3000.

Fig. 20 is an example of a plan view of the pixels 2B included in the photoelectric conversion apparatus according to the present embodiment.

As illustrated in Fig. 20, in a plan view, the first holding circuit 204 is located in a region surrounded by the first, second, third, and fourth pixels 2B-1, 2B-2, 2B-3, and 2B-4. Specifically, in a plan view, the first holding circuit 204 may be located in a region surrounded by a first bias control circuit 201-1, a first bias control circuit 201-2, a first bias control circuit 201-3, and a first bias control circuit 201-4. Specifically, in a plan view, the first holding circuit 204 may be located in a region surrounded by a first cascode transistor 202-1, a first cascode transistor 202-2, a first cascode transistor 202-3, and a first cascode transistor 202-4. Specifically, in a plan view, the first holding circuit 204 may be located in a region surrounded by a first transistor 203-1, a first transistor 203-2, a first transistor 203-3, and a first transistor 203-4. Specifically, in a plan view, the first holding circuit 204 may be located in a region surrounded by a pixel memory circuit 300-1, a pixel memory circuit 300-2, a pixel memory circuit 300-3, and a pixel memory circuit 300-4. In a plan view, the first holding circuit 204 may be located in a region surrounded by a first bonding portion HB1-1, a first bonding portion HB1-2, a first bonding portion HB1-3, and a first bonding portion HB1-4. In a plan view, the first holding circuit 204 may be located in a region surrounded by a sixth bonding portion HB6-1, a sixth bonding portion HB6-2, a sixth bonding portion HB6-3, and a sixth bonding portion HB6-4.

In the present embodiment, the first holding circuit 204 for performing a sample-and-hold operation is disposed at the gate electrodes of the first transistors 203. This improves the quality of signals output from the photoelectric conversion apparatus. Moreover, image quality degradation of images using the signals obtained from the photoelectric conversion apparatus is reduced.

Furthermore, in the present embodiment, the pixels 2 are divided into the pixels 2A and 2B, which are disposed on respective different substrates. This allows for an increase in the area of the photoelectric conversion circuits 100 and the pixel memory circuits 300. The increase in the area of the photoelectric conversion circuits 100 can improve the use efficiency of the incident light, and the performance of the photoelectric conversion apparatus improves. The increase in the area of the pixel memory circuits 300 can reduce leakage from the capacitive elements included in the pixel memory circuits 300, and the performance of the photoelectric conversion apparatus improves.

In the present embodiment, a first holding circuit 204 is shared by four pixels 2. This allows for an increase in the area of the pixel memory circuits 300 disposed on the third substrate 3000. Leakage from the capacitive elements included in the pixel memory circuits 300 can thus be reduced, and the performance of the photoelectric conversion apparatus improves.

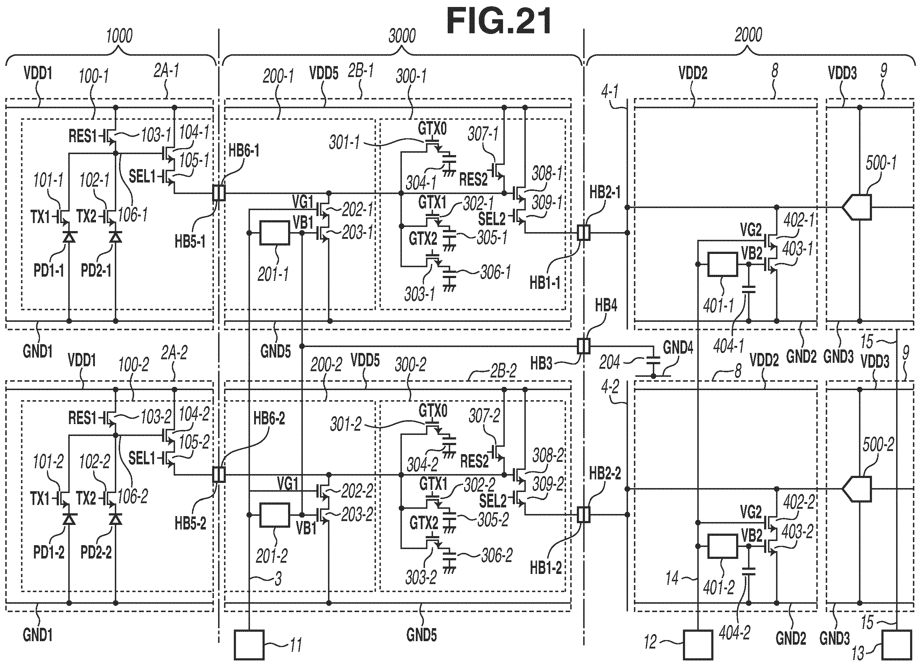

A photoelectric conversion apparatus according to an eleventh embodiment of the present invention will be described with reference to Fig. 21.

Components similar to those of the first to tenth embodiments are denoted by the same reference numerals. A description of these components may be omitted or simplified.

The present embodiment is a combination of the fifth and seventh embodiments.

Fig. 21 is an example of a circuit diagram of pixels 2, amplification circuits 8, and signal processing circuits 9 included in the photoelectric conversion apparatus according to the present embodiment. The present embodiment can be applied to both front-illuminated and back-illuminated sensors.

As illustrated in Fig. 21, a first holding circuit 204 is disposed on a second substrate 2000. A first pixel 2-1 and a second pixel 2-2 share the first holding circuit 204. Pixels 2A, which are parts of the pixels 2, are disposed on a first substrate 1000. Pixels 2B, which are the other parts of the pixels 2, and a first bias output circuit 11 are disposed on a third substrate 3000.

In the present embodiment, the first holding circuit 204 for performing a sample-and-hold operation is disposed at the gate electrodes of the first transistors 203. This improves the quality of signals output from the photoelectric conversion apparatus. Moreover, image quality degradation of images using the signals obtained from the photoelectric conversion apparatus is reduced.

Furthermore, in the present embodiment, the pixels 2 are divided into the pixels 2A and 2B, which are disposed on respective different substrates. This allows for an increase in the area of the photoelectric conversion circuits 100 and the pixel memory circuits 300. The increase in the area of the photoelectric conversion circuits 100 can improve the use efficiency of the incident light, and the performance of the photoelectric conversion apparatus improves. The increase in the area of the pixel memory circuits 300 can reduce leakage from the capacitive elements included in the pixel memory circuits 300, and the performance of the photoelectric conversion apparatus improves.

In the present embodiment, the first holding circuit 204 is disposed on the second substrate 2000. This allows for an increase in the area of the pixel memory circuits 300 disposed on the third substrate 3000. Leakage from the capacitive elements included in the pixel memory circuits 300 can thus be reduced, and the performance of the photoelectric conversion apparatus improves.

In the present embodiment, a first holding circuit 204 is shared by two pixels 2. This allows for an increase in the area of the pixel memory circuits 300 disposed on the third substrate 3000. Leakage from the capacitive elements included in the pixel memory circuits 300 can thus be reduced, and the performance of the photoelectric conversion apparatus improves.

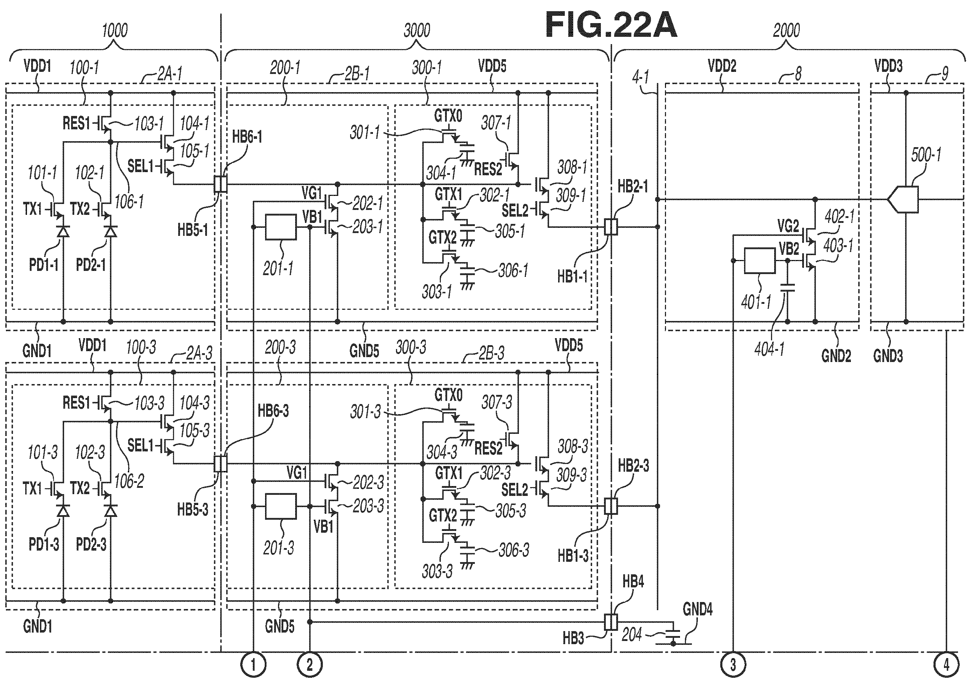

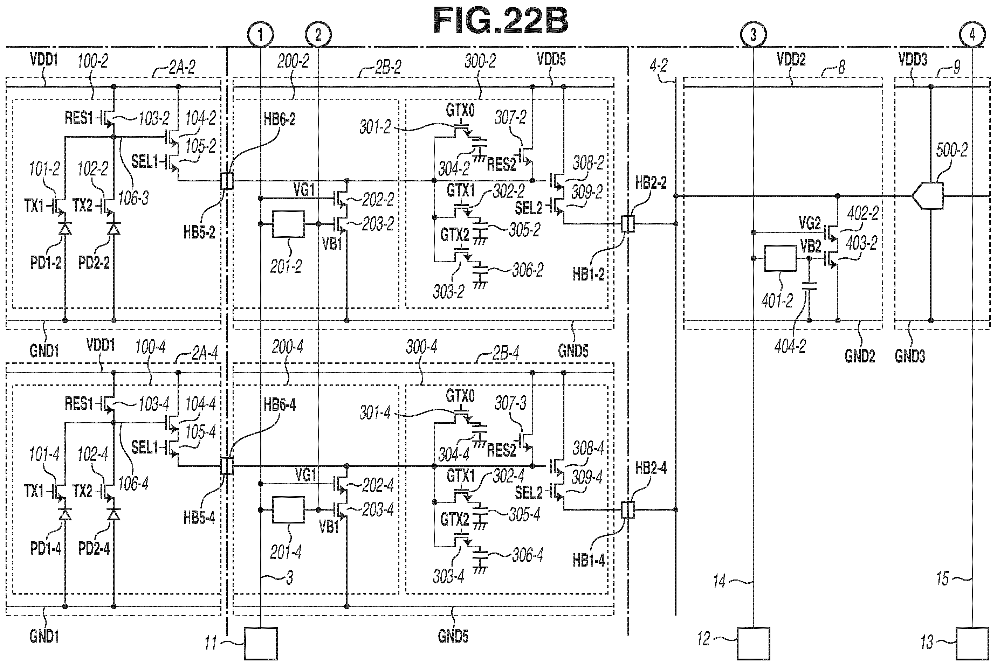

A photoelectric conversion apparatus according to a twelfth embodiment of the present invention will be described with reference to Figs. 22A and 22B.

Components similar to those of the first to eleventh embodiments are denoted by the same reference numerals. A description of these components may be omitted or simplified.

The present embodiment is a combination of the sixth and seventh embodiments.

Figs. 22A and 22B are an example of a circuit diagram of pixels 2, amplification circuits 8, and signal processing circuits 9 included in the photoelectric conversion apparatus according to the present embodiment. The present embodiment can be applied to both front-illuminated and back-illuminated sensors.

As illustrated in Figs. 22A and 22B, a first holding circuit 204 is disposed on a second substrate 2000. A first pixel 2-1, a second pixel 2-2, a third pixel 2-3, and a fourth pixel 2-4 share the first holding circuit 204. Pixels 2A, which are parts of the pixels 2, are disposed on a first substrate 1000. Pixels 2B, which are the other parts of the pixels 2, and a first bias output circuit 11 are disposed on a third substrate 3000.

In the present embodiment, the first holding circuit 204 for performing a sample-and-hold operation is disposed at the gate electrodes of the first transistors 203. This improve the quality of signals output from the photoelectric conversion apparatus. Moreover, image quality degradation of images using the signals obtained from the photoelectric conversion apparatus is reduced.

Furthermore, in the present embodiment, the pixels 2 are divided into the pixels 2A and 2B, which are disposed on respective different substrates. This allows for an increase in the area of the photoelectric conversion circuits 100 and the pixel memory circuits 300. The increase in the area of the photoelectric conversion circuits 100 can improve the use efficiency of the incident light, and the performance of the photoelectric conversion apparatus improves. The increase in the area of the pixel memory circuits 300 can reduce leakage from the capacitive elements included in the pixel memory circuits 300, and the performance of the photoelectric conversion apparatus improves.

In the present embodiment, the first holding circuit 204 is disposed on the second substrate 2000. This allows for an increase in the area of the pixel memory circuits 300 disposed on the third substrate 3000. Leakage from the capacitive elements included in the pixel memory circuits 300 can thus be reduced, and the performance of the photoelectric conversion apparatus improves.

In the present embodiment, a first holding circuit 204 is shared by four pixels 2. This allows for an increase in the area of the pixel memory circuits 300 disposed on the third substrate 3000. Leakage from the capacitive elements included in the pixel memory circuits 300 can thus be reduced, and the performance of the photoelectric conversion apparatus improves.

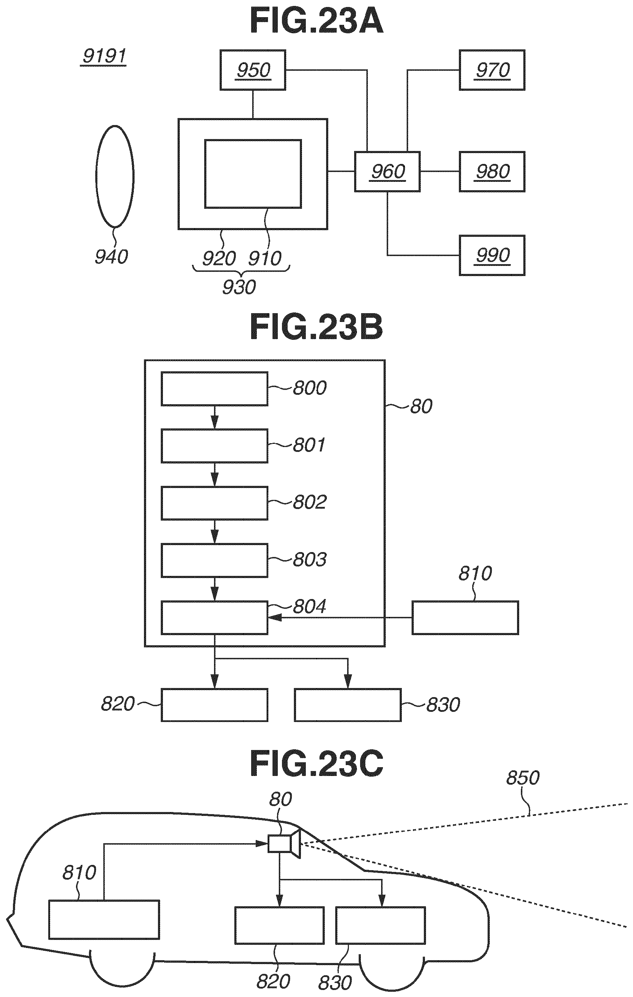

A thirteenth embodiment can be applied to any of the first to twelfth embodiments. Fig. 23A is a schematic diagram for describing equipment 9191 including a semiconductor apparatus 930 according to the present embodiment. The photoelectric conversion apparatus according to each of the foregoing embodiments can be used as the semiconductor apparatus 930. The equipment 9191 including the semiconductor apparatus 930 will be described in detail. The semiconductor apparatus 930 can include a semiconductor device 910. Aside from the semiconductor device 910, the semiconductor apparatus 930 can also include a package 920 accommodating the semiconductor device 910. The package 920 can include a base to which the semiconductor device 910 is fixed, and a glass or other lid opposed to the semiconductor device 910. The package 920 can further include bonding members for connecting terminals disposed on the base to terminals disposed on the semiconductor device 910. Examples of the bonding members include bonding wires and bumps.

The equipment 9191 can include at least one of an optical apparatus 940, a control apparatus 950, a processing apparatus 960, a display apparatus 970, a storage apparatus 980, and a mechanical apparatus 990. The optical apparatus 940 is compatible with the semiconductor apparatus 930. The optical apparatus 940 is a lens, shutter, or mirror, for example, and includes an optical system that guides light to the semiconductor apparatus 930. The control apparatus 950 controls the semiconductor apparatus 930. The control apparatus 950 is a semiconductor apparatus such as an application-specific integrated circuit (ASIC), for example.

The processing apparatus 960 processes signals output from the semiconductor apparatus 930. The processing apparatus 960 is a semiconductor apparatus for constituting an analog front end (AFE) or a digital front end (DFE). Examples include a central processing unit (CPU) and an ASIC. The display apparatus 970 is an electroluminescence (EL) display device or liquid crystal display device that displays information (image) acquired by the semiconductor apparatus 930. The storage apparatus 980 is a magnetic device or semiconductor device that stores information (information) acquired by the semiconductor apparatus 930. The storage apparatus 980 is a volatile memory such as a static random access memory (SRAM) and a dynamic random access memory (DRAM), or a nonvolatile memory such as a flash memory and a hard disk drive.

The mechanical apparatus 990 includes a movable unit or propelling unit such as a motor and an engine. The equipment 9191 displays the signals output from the semiconductor apparatus 930 on the display apparatus 970, or transmits the signals outside using a communication apparatus (not illustrated) included in the equipment 9191. For that purpose, the equipment 9191 desirably further includes the storage apparatus 980 and/or the processing apparatus 960 aside from storage and calculation circuits included in the semiconductor apparatus 930. The mechanical apparatus 990 may be controlled based on the signals output from the semiconductor apparatus 930.

The equipment 9191 is suitable for electronic equipment like an information terminal having an imaging function (such as a smartphone and a wearable terminal) and a camera (such as an interchangeable lens camera, a compact camera, a video camera, and a surveillance camera). The mechanical apparatus 990 in a camera can drive parts of the optical apparatus 940 for zooming, focusing, and shutter operations. Alternatively, the mechanical apparatus 990 in a camera can move the semiconductor apparatus 930 for image stabilization operation.

The equipment 9191 can be transportation equipment such as a vehicle, a vessel, and a flying object (drone or aircraft). The mechanical apparatus 990 in transportation equipment can be used as a moving apparatus. The equipment 9191 that is transportation equipment is suitable for transporting the semiconductor apparatus 930, or for assisting and/or automating driving (manipulation) using an imaging function. The processing apparatus 960 for assisting and/or automating driving (manipulation) can perform processing for operating the mechanical apparatus 990 serving as a moving apparatus based on information acquired by the semiconductor apparatus 930. Alternatively, the equipment 9191 may be medical equipment such as an endoscope, measuring equipment such as a ranging sensor, analytical equipment such as an electron microscope, office equipment such as a copying machine, and industrial equipment such as a robot.

According to the foregoing embodiment, favorable pixel characteristics can be obtained. As a result, the value of the semiconductor apparatus 930 can be enhanced. As employed herein, enhancing the value applies to at least one of the following: adding a function, improving performance, improving characteristics, improving reliability, improving manufacturing yield, reducing environmental load, reducing costs, miniaturization, and weight reduction.

The use of the semiconductor apparatus 930 according to the present embodiment for the equipment 9191 can thus enhance the value of the equipment 9191 as well. For example, incorporating the semiconductor apparatus 930 in transportation equipment enables excellent performance in capturing images outside the transportation equipment or measuring the external environment. When manufacturing and selling transportation equipment, it is therefore advantageous for enhancing the performance of the transportation equipment itself to decide to incorporate the semiconductor apparatus 930 in the transportation equipment. In particular, the semiconductor apparatus 930 is suitable for transportation equipment that provides driving assistance and/or performs automatic driving using information acquired by a semiconductor apparatus.

A photoelectric conversion system and a moving body according to the present embodiment will now be described with reference to Figs. 23B and 23C.

Fig. 23B illustrates an example of a photoelectric conversion system related to an on-vehicle camera. A photoelectric conversion system 80 includes a photoelectric conversion apparatus 800. The photoelectric conversion apparatus 800 is the photoelectric conversion apparatus (imaging apparatus) according to any one of the foregoing embodiments. The photoelectric conversion system 80 includes an image processing unit 801 that performs image processing on a plurality of pieces of image data acquired by the photoelectric conversion apparatus 800, and a parallax acquisition unit 802 that calculates a parallax (phase difference between parallax images) from the plurality of pieces of image data acquired by the photoelectric conversion apparatus 800. Here, the photoelectric conversion system 80 may include a not-illustrated optical system, such as a lens, a shutter, and a mirror, that guides light to the photoelectric conversion apparatus 800. Moreover, the pixels included in the photoelectric conversion apparatus 800 may be equipped with a plurality of photoelectric conversion units substantially conjugate with the pupil of the optical system. For example, a plurality of photoelectric conversion units substantially conjugate with the pupil is disposed for a single microlens. The plurality of photoelectric conversion units receives light beams passed through different positions of the pupil of the optical system, and the photoelectric conversion apparatus 800 outputs image data corresponding to the light beams passed through the different positions. The parallax acquisition unit 802 may calculate a parallax using the output image data. The photoelectric conversion system 80 also includes a distance acquisition unit 803 that calculates a distance to an object based on the calculated parallax, and a collision determination unit 804 that determines whether there is a possibility of collision based on the calculated distance. Here, the parallax acquisition unit 802 and the distance acquisition unit 803 are examples of a distance information acquisition unit that acquires distance information about an object. More specifically, the distance information is information about a parallax, a defocus amount, and/or a distance to an object. The collision determination unit 804 may determine the possibility of collision using one of the pieces of distance information. The distance information may be acquired using ToF. The distance information acquisition unit may be implemented by dedicatedly designed hardware or by a software module. Alternatively, the distance information acquisition unit may be implemented using a field-programmable gate array (FPGA), an ASIC, or a combination of these.

The photoelectric conversion system 80 is connected to a vehicle information acquisition apparatus 810, and can acquire vehicle information such as a vehicle speed, yaw rate, and steering angle. The photoelectric conversion system 80 is connected to a control electronic control unit (ECU) 820. The control ECU 820 is a control apparatus that outputs a control signal for causing braking force on the vehicle based on the determination result of the collision determination unit 804. The photoelectric conversion system 80 is also connected to an alarm apparatus 830 that issues an alarm to the driver based on the determination result of the collision determination unit 804. For example, if the determination result of the collision determination unit 804 indicates a high possibility of collision, the control ECU 820 performs vehicle control to avoid the collision or reduce damage by applying the brakes, releasing the accelerator, and/or suppressing the engine output. The alarm apparatus 830 warns the user by sounding an alarm, displaying alarm information on the screen of a car navigation system, and/or vibrating the seatbelt or steering wheel.

In the present embodiment, the photoelectric conversion system 80 captures images around the vehicle, such as in front of or behind the vehicle. Fig. 23C illustrates the photoelectric conversion system 80 in the case of capturing images in front of the vehicle (imaging range 850). The vehicle information acquisition apparatus 810 transmits instructions to the photoelectric conversion system 80 or the photoelectric conversion apparatus 800. With such a configuration, the accuracy of distance measurement can be further improved.

While an example of exercising control to avoid collision with other vehicles has been described above, the photoelectric conversion system 80 can also be applied to automatic driving control to follow another vehicle or automatic driving control to stay in the lane. Moreover, the photoelectric conversion system 80 is not limited to vehicles such as an automobile, and can be applied to a moving body (moving apparatus) such as a vessel, an aircraft, and an industrial robot. This moving body includes one of or both a driving force generation unit that generates driving force mainly used to move the moving body and a rotating body that is mainly used to move the moving body. The driving force generation unit can be an engine or a motor. The rotating body can be a tire, a wheel, a screw propeller of a ship, or a propeller of a flying object. The photoelectric conversion system 80 is not limited to a moving body, either, and can be widely applied to equipment that uses object recognition, such as an intelligent transportation system (ITS).

As employed herein, expressions such as "A or B", "at least one of A and B", "at least one of A and/or B", and "at least one or more of A and/or B" cover all possible combinations of the items mentioned unless otherwise explicitly defined. In other words, the foregoing expressions shall be understood to describe all of the following cases: where at least one A is included, where at least one B is included, and where at least one A and at least one B are both included. The same applies to combinations of three or more elements.

The embodiments described above can be appropriately changed without departing from the technical concept. The disclosure in the present specification is not limited to matters described herein, and includes all matters that can be identified from the present specification and the drawings accompanying the present specification. The disclosure in the present specification includes a complementary set of concepts described in the present specification. More specifically, if "A is larger than B" is described in the present specification, even if a description "A is not larger than B" is omitted, the present specification is assumed to disclose the description "A is not larger than B". This is because, in a case where "A is larger than B" is described, a case where "A is not larger than B" is assumed to be considered.

The disclosure of the embodiments includes the following configurations.
1. A photoelectric conversion apparatus comprising:
   a plurality of substrates including a first substrate and a second substrate;
   a plurality of pixels each including a photoelectric conversion element configured to generate a charge based on an amount of light received, a floating diffusion configured to output a signal based on the charge, and a first source-follower circuit configured to amplify the signal output from the floating diffusion, the first source-follower circuit including an amplification transistor and a first transistor configured to drive the amplification transistor;
   a first holding circuit electrically connected to a gate electrode of the first transistor;
   a second source-follower circuit configured to amplify a signal output from the first source-follower circuit; and
   a signal processing circuit configured to process a signal output from the second source-follower circuit,
   wherein the photoelectric conversion element is disposed on the first substrate, and
   wherein the signal processing circuit is disposed on the second substrate.
2. The photoelectric conversion apparatus according to configuration 1, further comprising:
   a second transistor configured to drive the second source-follower circuit; and
   a second holding circuit electrically connected to a gate electrode of the second transistor,
   wherein a first capacitive element included in the first holding circuit has a capacitance lower than a capacitance of a second capacitive element included in the second holding circuit.
3. The photoelectric conversion apparatus according to configuration 1 or 2,
   wherein each of the plurality of pixels includes a memory circuit configured to hold the signal output from the first source-follower circuit, and
   wherein a first capacitive element included in the first holding circuit has a capacitance lower than a capacitance of a third capacitive element included in the memory circuit.
4. The photoelectric conversion apparatus according to any one of configurations 1 to 3, further comprising:
   a bias output circuit configured to supply a bias voltage to the gate electrode of the first transistor; and
   a bias control circuit configured to control connection between the gate electrode and the bias output circuit,
   wherein the bias output circuit is electrically connected to the first holding circuit via the bias control circuit.
5. The photoelectric conversion apparatus according to any one of configurations 1 to 4, wherein the bias control circuit is configured to electrically disconnect the gate electrode from the bias output circuit at timing when the floating diffusion outputs the signal based on the charge.
6. The photoelectric conversion apparatus according to any one of configurations 1 to 5,
   wherein the plurality of pixels includes a first pixel and a second pixel, and
   wherein the first holding circuit is electrically connected to the gate electrode of the first transistor included in the first pixel and the gate electrode of the first transistor included in the second pixel.
7. The photoelectric conversion apparatus according to any one of configurations 1 to 6, wherein the first pixel and the second pixel adjoin each other.
8. The photoelectric conversion apparatus according to any one of configurations 1 to 7, wherein in a plan view, the first holding circuit is located between the first pixel and the second pixel.
9. The photoelectric conversion apparatus according to any one of configurations 1 to 8, wherein in a plan view, the first holding circuit is located between the photoelectric conversion element of the first pixel and the photoelectric conversion element of the second pixel.
10. The photoelectric conversion apparatus according to any one of configurations 1 to 9, further comprising a first bonding portion and a second bonding portion configured to bond the first substrate to a substrate different from the first substrate,
   wherein in a plan view, the first holding circuit is located between the first bonding portion overlapping the first pixel and the second bonding portion overlapping the second pixel.
11. The photoelectric conversion apparatus according to any one of configurations 1 to 10,
   wherein the plurality of pixels includes a third pixel and a fourth pixel,
   wherein the first and second pixels are disposed in a first row,
   wherein the third and fourth pixels are disposed in a second row,
   wherein the first and third pixels are disposed in a first column,
   wherein the second and fourth pixels are disposed in a second column, and
   wherein the first holding circuit is electrically connected to the gate electrode of the first transistor included in the third pixel and the gate electrode of the first transistor included in the fourth pixel.
12. The photoelectric conversion apparatus according to any one of configurations 1 to 11, wherein in a plan view, the first holding circuit is located in a region surrounded by the first pixel, the second pixel, the third pixel, and the fourth pixel.
13. The photoelectric conversion apparatus according to any one of configurations 1 to 12, wherein in a plan view, the first holding circuit is located in a region surrounded by the photoelectric conversion element of the first pixel, the photoelectric conversion element of the second pixel, the photoelectric conversion element of the third pixel, and the photoelectric conversion element of the fourth pixel.
14. The photoelectric conversion apparatus according to any one of configurations 1 to 13, further comprising a first bonding portion, a second bonding portion, a third bonding portion, and a fourth bonding portion configured to bond the first substrate to a substrate different from the first substrate,
   wherein in a plan view, the first holding circuit is located in a region surrounded by the first bonding portion overlapping the first pixel, the second bonding portion overlapping the second pixel, the third bonding portion overlapping the third pixel, and the fourth bonding portion overlapping the fourth pixel.
15. The photoelectric conversion apparatus according to any one of configurations 1 to 14, further comprising a plurality of first holding circuits,
   wherein each of the plurality of first holding circuits is electrically connected to the gate electrode of the first transistor included in each of the plurality of pixels.
16. The photoelectric conversion apparatus according to any one of configurations 1 to 15, further comprising:
   a second transistor configured to drive the second source-follower circuit; and
   a second holding circuit electrically connected to a gate electrode of the second transistor,
   wherein the first holding circuit and the second holding circuit are disposed on different substrates.
17. The photoelectric conversion apparatus according to any one of configurations 1 to 16, wherein the first holding circuit is disposed on the first substrate, and the second holding circuit is disposed on the second substrate.
18. The photoelectric conversion apparatus according to any one of configurations 1 to 17, further comprising:
   a second transistor configured to drive the second source-follower circuit; and
   a second holding circuit electrically connected to a gate electrode of the second transistor,
   wherein the first holding circuit and the second holding circuit are disposed on a same substrate.
19. The photoelectric conversion apparatus according to any one of configurations 1 to 18, wherein the first holding circuit and the second holding circuit are disposed on the second substrate.
20. The photoelectric conversion apparatus according to any one of configurations 1 to 19, further comprising a third substrate on which the first transistor is disposed,
   wherein the first substrate, the third substrate, and the second substrate are bonded in this order.
21. The photoelectric conversion apparatus according to any one of configurations 1 to 20, wherein the signal processing circuit includes an analog-to-digital conversion circuit.
22. The photoelectric conversion apparatus according to any one of configurations 1 to 21, wherein the first transistor and the first holding circuit are both supplied with a reference voltage from a common reference voltage line.
23. The photoelectric conversion apparatus according to any one of configurations 1 to 22, wherein the first transistor and the first holding circuit are supplied with a reference voltage from respective different reference voltage lines.
24. Equipment comprising:
   the photoelectric conversion apparatus according to any one of configurations 1 to 23; and
   at least one of
   an optical apparatus configured to guide light to the photoelectric conversion apparatus,
   a control apparatus configured to control the photoelectric conversion apparatus,
   a processing apparatus configured to process a signal output from the photoelectric conversion apparatus,
   a display apparatus configured to display information acquired by the photoelectric conversion apparatus,
   a storage apparatus configured to store the information acquired by the photoelectric conversion apparatus, and
   a mechanical apparatus configured to operate based on the information acquired by the photoelectric conversion apparatus.

According to an embodiment of the present invention, a high-performance photoelectric conversion apparatus can be provided.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. A photoelectric conversion apparatus comprising:
a plurality of substrates including a first substrate (1000) and a second substrate (2000);
a plurality of pixels (2) each including a photoelectric conversion element (PD1, PD2) configured to generate a charge based on an amount of light received, a floating diffusion (106) configured to output a signal based on the charge, and a first source-follower circuit (104, 202, 203) configured to amplify the signal output from the floating diffusion (106), the first source-follower circuit (104, 202, 203) including an amplification transistor (104) and a first transistor (203) configured to drive the amplification transistor;
a first holding circuit (204) electrically connected to a gate electrode of the first transistor (203);
a second source-follower circuit (308, 402, 403) configured to amplify a signal output from the first source-follower circuit (104, 202, 203); and
a signal processing circuit (9) configured to process a signal output from the second source-follower circuit (308, 402, 403),
wherein the photoelectric conversion element (PD1, PD2) is disposed on the first substrate (2000), and
wherein the signal processing circuit (9) is disposed on the second substrate (2000).

2. The photoelectric conversion apparatus according to claim 1, further comprising:
a second transistor (403) configured to drive the second source-follower circuit (308, 402, 403); and
a second holding circuit (404) electrically connected to a gate electrode of the second transistor (403),
wherein a first capacitive element included in the first holding circuit (204) has a capacitance lower than a capacitance of a second capacitive element included in the second holding circuit (404).

3. The photoelectric conversion apparatus according to claim 1 or 2,
wherein each of the plurality of pixels (2) includes a memory circuit (300, 304, 305, 306) configured to hold the signal output from the first source-follower circuit (104, 202, 203), and
wherein a first capacitive element included in the first holding circuit (204) has a capacitance lower than a capacitance of a third capacitive element included in the memory circuit (300, 304, 305, 306).

4. The photoelectric conversion apparatus according to any one of claims 1 to 3, further comprising:
a bias output circuit (11) configured to supply a bias voltage to the gate electrode of the first transistor (203); and
a bias control circuit (201) configured to control connection between the gate electrode and the bias output circuit (11),
wherein the bias output circuit (11) is electrically connected to the first holding circuit (204) via the bias control circuit (201).

5. The photoelectric conversion apparatus according to claim 4, wherein the bias control circuit (201) is configured to electrically disconnect the gate electrode from the bias output circuit (11) at timing when the floating diffusion (106) outputs the signal based on the charge.

6. The photoelectric conversion apparatus according to any one of claims 1 to 5,
wherein the plurality of pixels includes a first pixel (2-1) and a second pixel (2-2), and
wherein the first holding circuit (204) is electrically connected to the gate electrode of the first transistor (203-1) included in the first pixel (2-1) and the gate electrode of the first transistor (203-2) included in the second pixel (2-2).

7. The photoelectric conversion apparatus according to claim 6, wherein the first pixel (2-1) and the second pixel (2-2) adjoin each other.

8. The photoelectric conversion apparatus according to claim 6, wherein in a plan view, the first holding circuit (204) is located between the first pixel (2-1) and the second pixel (2-2).

9. The photoelectric conversion apparatus according to claim 8, wherein in a plan view, the first holding circuit (204) is located between the photoelectric conversion element (PD1, PD2) of the first pixel (2-1) and the photoelectric conversion element of the second pixel (2-2).

10. The photoelectric conversion apparatus according to claim 8 or 9, further comprising a first bonding portion (HB1) and a second bonding portion (HB2) configured to bond the first substrate (100) to a substrate different from the first substrate,
wherein in a plan view, the first holding circuit (204) is located between the first bonding portion (HB1) overlapping the first pixel and the second bonding portion (HB2) overlapping the second pixel.

11. The photoelectric conversion apparatus according to any one of claims 6 to 10,
wherein the plurality of pixels includes a third pixel (2-3) and a fourth pixel (2-4),
wherein the first (2-1) and second (2-2) pixels are disposed in a first row,
wherein the third (2-3) and fourth (2-4) pixels are disposed in a second row,
wherein the first (2-1) and third (2-3) pixels are disposed in a first column,
wherein the second (2-2) and fourth (2-4) pixels are disposed in a second column, and
wherein the first holding circuit (204) is electrically connected to the gate electrode of the first transistor (203-3) included in the third pixel (2-3) and the gate electrode of the first transistor (203-4) included in the fourth pixel (2-4).

12. The photoelectric conversion apparatus according to claim 11, wherein in a plan view, the first holding circuit (204) is located in a region surrounded by the first pixel (2-1), the second pixel (2-2), the third pixel (2-3), and the fourth pixel (2-4).

13. The photoelectric conversion apparatus according to claim 12, wherein in a plan view, the first holding circuit (204) is located in a region surrounded by the photoelectric conversion element (PD1-1, PD2-1) of the first pixel (2-1), the photoelectric conversion element (PD1-2, PD2-2) of the second pixel (2-2), the photoelectric conversion element (PD1-3, PD2-3) of the third pixel (2-3), and the photoelectric conversion element (PD1-4, PD2-4) of the fourth pixel (2-4).

14. The photoelectric conversion apparatus according to claim 12 or 13, further comprising a first bonding portion (HB1), a second bonding portion (HB1), a third bonding portion (HB1), and a fourth bonding portion (HB1) configured to bond the first substrate (1000) to a substrate different from the first substrate,
wherein in a plan view, the first holding circuit (204) is located in a region surrounded by the first bonding portion (HB1) overlapping the first pixel, the second bonding portion (HB2) overlapping the second pixel, the third bonding portion (HB3) overlapping the third pixel, and the fourth bonding portion (HB4) overlapping the fourth pixel.

15. The photoelectric conversion apparatus according to any one of claims 1 to 14, further comprising a plurality of first holding circuits (204),
wherein each of the plurality of first holding circuits (204) is electrically connected to the gate electrode of the first transistor (203) included in each of the plurality of pixels.

16. The photoelectric conversion apparatus according to any one of claims 1 to 15, further comprising:
a second transistor (403) configured to drive the second source-follower circuit (308, 402, 403); and
a second holding circuit (404) electrically connected to a gate electrode of the second transistor (403),
wherein the first holding circuit (204) and the second holding circuit (404) are disposed on different substrates.

17. The photoelectric conversion apparatus according to claim 16, wherein the first holding circuit (204) is disposed on the first substrate (1000), and the second holding circuit (404) is disposed on the second substrate (2000).

18. The photoelectric conversion apparatus according to any one of claims 1 to 17, further comprising:
a second transistor (403) configured to drive the second source-follower circuit (308, 402, 403); and
a second holding (404) circuit electrically connected to a gate electrode of the second transistor (403),
wherein the first holding circuit (204) and the second holding circuit (404) are disposed on a same substrate (2000).

19. The photoelectric conversion apparatus according to claim 18, wherein the first holding circuit (204) and the second holding circuit (404) are disposed on the second substrate (2000).

20. The photoelectric conversion apparatus according to any one of claims 1 to 19, further comprising a third substrate (3000) on which the first transistor (203) is disposed,
wherein the first substrate (1000), the third substrate (3000), and the second substrate (2000) are bonded in this order.

21. The photoelectric conversion apparatus according to any one of claims 1 to 20, wherein the signal processing circuit (9) includes an analog-to-digital conversion circuit.

22. The photoelectric conversion apparatus according to any one of claims 1 to 21, wherein the first transistor (203) and the first holding circuit (204) are both supplied with a reference voltage from a common reference voltage line.

23. The photoelectric conversion apparatus according to any one of claims 1 to 22, wherein the first transistor (203) and the first holding circuit (204) are supplied with a reference voltage from respective different reference voltage lines.

24. Equipment (9191) comprising:
the photoelectric conversion apparatus (930) according to any one of claims 1 to 23; and
at least one of
an optical apparatus (940) configured to guide light to the photoelectric conversion apparatus,
a control apparatus (950) configured to control the photoelectric conversion apparatus,
a processing apparatus (960) configured to process a signal output from the photoelectric conversion apparatus,
a display apparatus (970) configured to display information acquired by the photoelectric conversion apparatus,
a storage apparatus (980) configured to store the information acquired by the photoelectric conversion apparatus, and
a mechanical apparatus (990) configured to operate based on the information acquired by the photoelectric conversion apparatus.
